# EUROPÄISCHE PATENTSCHRIFT

(11) **EP 1 882 518 B1**
(45) Veröffentlichungstag und Bekanntmachung des Hinweises auf die Patenterteilung: **08.12.2010**
(21) Anmeldenummer: 07014486.0
(22) Anmeldetag: 24.07.2007
(51) Int. Cl.: B01J 8/06

(54) **Verfahren zur Temperaturänderung eines Rohrbündelreaktors**
Method for modifying the temperature of a multi-tube reactor
Procédé de modification de la température d'un réacteur à faisceau tubulaire

(30) Priorität: 27.07.2006 DE 102006034811
(43) Veröffentlichungstag der Anmeldung: 30.01.2008
(73) Patentinhaber: MAN Diesel & Turbo SE, 86153 Augsburg (DE)
(72) Erfinder: Lehr, Manfred, 94469 Deggendorf (DE); Dachs, Josef Dr., 94469 Deggendorf (DE); Schuster, Wolfgang Dr., 94554 Moos (DE)
(74) Vertreter: Paustian, Othmar

(56) Entgegenhaltungen:
- EP-A2- 1 166 865
- WO-A1-2004/007064
- WO-A2-00/54877
- DE-B1- 1 542 517

## Beschreibung

Die Erfindung bezieht sich auf ein Verfahren zur Temperaturänderung eines Rohrbündelreaktors für katalytische Gasphasenreaktionen beim Anfahren und Abfahren, wobei der Rohrbündelreaktor einen Reaktorhauptteil aufweist mit einem Bündel vertikal angeordneter Reaktionsrohre, einem oberen und einem unteren Rohrboden, die mit den oberen, bzw. unteren Enden der Reaktionsrohre dicht verbunden sind, und einem Reaktormantel, der das Rohrbündel umschließt, und wobei die Außenseiten der Reaktionsrohre im Normalbetrieb von einem Wärmeträger umspült werden, der eine Schmelztemperatur im Bereich von 100°C bis 450°C aufweist und in mindestens einem Kreislauf durch den Reaktorhauptteil hindurch umgewälzt wird, mit den folgenden Schritten: a) Verändern der Wärmeträgertemperatur durch einen Wärmetauscher beim Umwälzen des Wärmeträgers und b) Hindurchführen eines Temperiergases durch die Reaktionsrohre zumindest dann, wenn der Wärmeträger noch nicht bzw. nicht mehr umgewälzt wird.

Katalytische Gasphasenprozesse wie Oxidations-, Hydrierungs-, Dehydrierungs-, Nitrierungs-, Alkylierungsprozesse werden in der chemischen Industrie erfolgreich in Rohrbündelreaktoren mit isothermen Festbetten durchgeführt. Solche Rohrbündelreaktoren sind beispielsweise aus DE 2 207 166 B4 bekannt.

Dabei kann die Reaktion prinzipiell sowohl eine endotherme wie auch eine exotherme sein. Das Festbett - im Wesentlichen ein granularer Katalysator - befindet sich in den Reaktionsrohren eines allgemein ringförmigen, vertikal angeordneten Reaktionsrohrbündels, deren beide Enden abgedichtet in Rohrböden festgelegt sind. Das Reaktionsgasgemisch ("Feedgas") wird den Reaktionsrohren über eine den betreffenden Rohrboden überspannende Reaktorhaube zu- und ebenso über eine den anderen Rohrboden überspannende Reaktorhaube (als Produktgasgemisch) abgeführt. Im Folgenden werden die Begriffe Reaktor und Rohrbündelreaktor synonym verwendet.

Stabile Reaktionsbedingungen werden dadurch geschaffen, dass bei konstanter Temperatur ein Wärmeträger mit einer Pumpe zur Kühlung bzw. Erwärmung des Reaktionsrohres und mit anschließender Kühlung/Erwärmung in einem meist im Nebenschluss gelegenen Wärmetauscher umgewälzt wird. Dabei wird der Wärmeträger im Reaktor mit geeigneten, horizontal verlaufenden Umlenkblechen so geführt, dass er die Reaktionsrohre in den jeweiligen Abschnitten zwischen den Umlenkblechen im Wesentlichen quer anströmt und axial von Abschnitt zu Abschnitt durch den Reaktor geführt wird, so dass er global gesehen den Reaktor längs durchströmt. Dabei haben sich insbesondere für große Rohrbündelreaktoren, die heute oftmals über 30.000 und mehr Reaktionsrohre verfügen, ring- und scheibenförmige Umlenkbleche besonders bewährt. Um möglichst gleiche Reaktionsbedingungen für alle Reaktionsrohre entlang des Strömungswegs zu erhalten, ist eine möglichst gute Gleichverteilung des Wärmeträgers innerhalb einer jeden Ebene senkrecht zur Reaktorachse anzustreben. In WO 2004/052524 A1 wird dies durch entsprechende Teilstromöffnungen in den Umlenkblechen erreicht. Unterstützt wird dies durch eine Vielzahl anderer Einrichtungen wie Mischer, Turbulenzerzeuger oder zusätzlicher Strömungsleiteinrichtungen. Die für den Betrieb des Rohrbündelreaktors notwendigen Nebenapparate wie Pumpe, Wärmetauscher und Aufheizer liegen gewöhnlich außerhalb des Reaktormantels und sind an diesen direkt mit möglichst kurzen Verbindungsleitungen angeschlossen. Entsprechend tritt der Wärmeträger in der Nähe eines Rohrbodens in den Reaktormantel ein und in der Nähe des anderen Rohrbodens aus ihm aus.

Bezüglich der Strömungsführung des Wärmeträgers im Reaktorsystem ist z.B. aus EP 1 080 781 B1 bekannt, von einem aus dem Reaktor entnommenen Wärmeträgerstrom einen Teilstrom abzuteilen. Dieser wird anschließend in einen Wärmetauscher geführt, danach mit dem Hauptstrom wieder zusammengeführt und mit einer Umwälzungseinrichtung wieder zum Reaktor zurückgeführt. In einer Variante wird der vom Wärmetauscher kommende Teilstrom dem wärmeträgeraustrittsseitigen Ringkanal zugeführt. Eine solche Konstruktion hat den Nachteil, dass entweder im Wärmetauscher-Kreislauf eine zusätzliche Umwälzeinrichtung benötigt wird oder in die parallel zum Wärmetauscher verlaufenden Hauptleitung eine Regelarmatur installiert werden muss, durch die der durch den Wärmetauscher-kreislauf strömende Anteil des Wärmeträgers einstellbar ist. Dieses Vorgehen hat eine stärkere Umwälzeinrichtung mit vergrößerten Investitionskosten zur Folge.

In DE 2 207 166 B4 ist eine Ausführungsform dargestellt, bei der keine zusätzlichen Einrichtungen im Umwälzsystem für den Wärmeträger benötigt werden. Hier fördert eine einzige Umwälzeinrichtung einen größeren Teil des Wärmeträgers als Hauptstrom in den Reaktor zurück und einen kleineren Teil als Nebenstrom in einen Wärmetauscher. Der dort gekühlte Nebenstrom wird mit dem vom Reaktor kommenden Hauptstrom zusammengeführt und in die Umwälzeinrichtung geleitet, wo die beiden Ströme weitergefördert und vermischt werden. Zusätzlich noch können hinter der Umwälzeinrichtung Mischer vorgesehen werden.

Für optimale Betriebsergebnisse wird jeder Rohrbündelreaktor an den jeweiligen Prozess angepasst. Von besonderem Interesse ist dabei die Temperaturführung entlang der Reaktionsrohre. Oftmals ist es ausreichend, wenn die Reaktion isotherm durchgeführt wird. In einem solchen Fall ist eine einzonige Bauweise ausreichend. Ist die beabsichtigte Reaktion jedoch komplexer und werden für eine optimale Reaktionsführung entlang des Reaktionsrohrs mehrere unterschiedliche Temperaturbereiche benötigt, so empfehlen sich zusätzliche Ringkanäle, Bypässe oder gar eine mehrzonige Bauweise, mit denen das Temperaturprofil entlang eines Reaktionsrohrs gut beeinflussbar ist. Beispiele zu diesen Verfahrensweisen sind in DE 2 201 528 B4, DE 28 30 765 A1, DE 698 01 797 T2, WO 2004/052526 A1 oder in WO 2004/067165 A1 gezeigt.

Die Wahl des zur Temperierung solcher Gasphasenprozesse verwendeten Wärmeträgers hängt überwiegend von der jeweiligen Reaktionstemperatur ab. Wird nicht mit einem Mittel gearbeitet, das bei der Reaktionstemperatur siedet, sondern mit einem solchen, das in flüssigem Zustand bleibt, werden Stoffe verwendet, die einen möglichst niedrigen Dampfdruck besitzen. Für solche Anwendungen sind flüssige Salzschmelzen weit verbreitet, die meist aus einer Mischung von Alkalinitraten und -nitriten bestehen. Im Folgenden werden aus Vereinfachungsgründen die Begriffe Salz und Salzmischung synonym verwendet. Eine bevorzugte Salzmischung besteht aus 53 Gew.-% Kaliumnitrat, 40 Gew.-% Natriumnitrit und 7°Gew.-% Natriumnitrat. Eine solche Mischung bildet ein Eutektikum, das bei ca. 142°C schmilzt. Die Arbeitstemperatur liegt allgemein zwischen 200°C und 550°C. Durch Reaktion mit Sauerstoff und durch thermische Zersetzung verringert sich der Nitritgehalt, und der Nitratanteil steigt an. Durch Stickstoffüberlagerung können diese Prozesse verzögert werden, und durch Begrenzung der Temperatur auf etwa 450°C kann das Salz praktisch als thermisch beständig angesehen werden. Als Folge des Zersetzungsprozesses erhöht sich der Schmelzpunkt des sich in der Anlage befindlichen Salzgemisches. Die Veränderungen der übrigen physikalischen Kennwerte sind jedoch unerheblich und beeinflussen die Wärmeübertragungseigenschaften des Salzes kaum. Die Anwendung wird generell auf max. 620° begrenzt, da ab dieser Temperatur das Salz verstärkt mit Eisen reagiert.

Wie oben beschrieben, befassen sich die meisten Veröffentlichungen zum Thema der Wärmeträgerführung mit der Einstellung eines optimalen Temperaturprofils. Sie betreffen meist nur den stationären Betriebszustand. Nur wenige Veröffentlichungen befassen sich auch mit den instationären Betriebszuständen beim An- und Abfahren der Anlage.

In GB 310 157 wird ein Wärmetauscher vorgestellt, welcher über einen Bypass mit einem Regelventil verfügt, welches beim Anfahrvorgang, wenn der Wärmeträger noch relativ kalt und hochviskos ist, automatisch öffnet und so einen großen Teil des Wärmeträgers am Wärmetauscher vorbei führt.

Soll allgemein ein Wärmetauscher mit flüssigem Salz als Wärmeträger betrieben werden, so ist es vorzuziehen, dass das beim Anfahren zunächst noch feste Salz in einem Vorlagebehälter aufgeschmolzen wird. Gleichzeitig sollte der Wärmetauscher auf eine Temperatur vorgewärmt werden, die größer als die Schmelztemperatur des Salzes ist, damit das flüssige Salz nicht gleich abkühlt und erstarrt, wenn es in den Wärmetauscher gefüllt wird. Es ist auch möglich, das Salz bei der Außerbetriebnahme des Reaktors auch im Reaktor selbst zu belassen und dort erstarren zu lassen. Das Wiederaufschmelzen muss in diesem Fall von oben nach unten erfolgen. Weiterhin muss über der festen Salzoberfläche ausreichend Ausdehnungsraum vorhanden sein. Das erschmolzene Salz nimmt beim Phasenwechsel und mit weiter steigender Temperatur ein immer größeres Volumen ein und kann sich somit ungehindert nach oben ausdehnen. Würde es von unten aufgeschmolzen, so hätte es keinen Raum, sich auszudehnen. Das sich ausdehnende Salz könnte so die es umgebenden Wände unzulässig verformen oder gar aufreißen.

Anschließend muss das Salz auf Betriebstemperatur gebracht werden. Dabei ist zu beachten, dass das gerade aufgeschmolzene Salz noch relativ hochviskos ist, also einen großen Strömungswiderstand verursacht. Die folgenden Betrachtungen beziehen sich auf einen mit flüssigem Salz temperierten Rohrbündelreaktor als Beispiel für einen solchen Wärmetauscher.

Das Vorheizen eines Reaktors mittels Durchleiten von heißem Gas durch die Reaktionsrohre ist z.B. aus DE 1 542 517 B4 grundsätzlich bekannt. Dort ist ein Reaktor beschrieben, bei dem die Reaktion in katalysatorgefüllten Reaktionsrohren stattfindet. Die Reaktionsrohre werden dabei von dem in den Mantelraum des Reaktors eintretenden Reaktionsgas gekühlt. Dieser Reaktor verfügt über eine zusätzliche Leitung, die in den Gaseintrittsbereich der Reaktionsrohre führt und die u.a. beim Ingangsetzen des Reaktors dem Einleiten von nicht reagiertem vorgeheizten Gas dient.

Die Patentschrift US 6 046 343 befasst sich mit der Entstaubung der Katalysatorpartikel in Reaktionsrohren. Ein Teil dieses Verfahrens ist das Verhindern einer Katalysatorschädigung durch Feuchtigkeitsaufnahme während des Spülvorgangs. Erreicht werden soll dies, indem aufgeheizte Luft durch den Mantelraum des Reaktors geführt wird und diesen auf mindestens 120°C aufheizt, bevorzugt jedoch auf eine Temperatur zwischen 140°C und 200°C. In der Patentschrift wird beschrieben, dass eine alternative Aufheizmöglichkeit darin besteht, heiße Luft durch die Reaktionsrohre hindurch zu leiten. Nachdem der Katalysator in den Reaktionsrohren vom Staub befreit ist, wird Stickstoff zur Spülung durch das Katalysatorbett geleitet, während es mantelseitig zunächst mit aufgeheizter Luft, dann mit Hochdruckdampf und schließlich mit einem Salzbad als Wärmeträger für die Reaktion auf Starttemperatur gebracht wird.

Die Patentschrift DE 2 062 095 B4 beschreibt den Aufheizvorgang eines Rohrbündelreaktors zur Durchführung exothermer chemischer Reaktionen, der mit einem nicht näher beschriebenen Wärmeträger gekühlt wird. Da die Betriebstemperatur zwischen 350°C und 450°C liegt, bietet sich dem Fachmann als bevorzugten Wärmeträger flüssiges Salz an. Dort wird ausgeführt, dass ein solches System gelegentlich abgestellt und anschließend wieder angefahren werden muss, z.B. beim Wechseln des Katalysators. Beim Anfahren setzt der Reaktionsvorgang erst nach Erreichen einer höheren Temperatur ein. Hierfür ist eine entsprechende Vorwärmung des Rohrbündelreaktors erforderlich. Die Verwendung eines zusätzlichen Wärmeträgers, der durch den Reaktionsraum geführt wird, ist an sich möglich. In DE 2 062 095 B4 wird argumentiert, dass Dampf mit genügend hoher Temperatur selten zur Verfügung stünde, während Heißluft und Rauchgase einen erheblichen Aufwand an Heizaggregaten und Zubehör erfordern würden bzw. betriebsmäßige Mängel mit sich brächten. Als Lösung dieses Problems wird vorgeschlagen, in Parallelschaltung zu dem vorhandenen Umlaufsystem des Wärmeträgers zusätzlich eine Heizeinrichtung außerhalb des Reaktionsbehälters anzuordnen und mit diesem über ein kombiniertes Absperr- und Regelorgan an zwei Stellen unterschiedlichen Druckes zu verbinden.

In der EP 1 166 865 A2 wird dieser an sich bekannte Gedanke, den Reaktor mittels Durchleiten von heißem Temperiergas vorzuwärmen und anschließend flüssiges Salz in den Mantelraum zu führen, aufgegriffen und näher beschrieben. Im einzelnen betrifft diese Patentschrift ein Verfahren zum Anfahren eines Rohrbündelreaktors, welches zur Umwälzung eines Wärmeträgers mit einem Schmelzpunkt im Bereich zwischen 50°C und 250°C zur Außenseite der Reaktionsrohre ausgelegt ist. Zum Anfahren wird ein Temperiergas mit einer Temperatur im Bereich zwischen 100°C - 400°C in die Reaktionsrohre eingeführt wird und dadurch die Temperatur erhöht, wobei nachfolgend der Wärmeträger in einem erhitztem Zustand um die Außenseite der Reaktionsrohre umgewälzt wird. Der Wärmeträger ist eine Salzmischung aus Alkalinitraten und - nitriten. Die weiteren Ausführungen betreffen die Temperatur des Temperiergases am Austritt aus dem Reaktor, ab welcher der Wärmeträger eingefüllt werden darf, die weitere Temperaturerhöhung und die Anwendung dieses Verfahrens auf einen Mehrzonenreaktor sowie die Herstellung von (Meth-)Acrolein und/oder (Meth-) Acrylsäure, nachdem der Reaktor mit vorstehendem Verfahren angefahren worden ist.

In einem Ausführungsbeispiel der EP 1 166 865 A2 wird ein relativ kleiner Zweizonen-Rohrbündelreaktor mit einem Innendurchmesser von 4000 mm, einer Länge der Reaktionsrohre im Mantelraum von 6500 mm und einer Rohranzahl von 9300 Reaktionsrohren beschrieben. Für jenen Reaktor wird das vorgestellte Verfahren möglicherweise keine Schäden verursachen. Bei großen Rohrbündelreaktoren jedoch mit über 30.000 Reaktionsrohren, einem Durchmesser von ca. 8000 mm und einer Länge in gleicher Größenordnung sind weitere Gesichtspunkte zu berücksichtigen.

Insbesondere ist zu berücksichtigen, dass es bei solchen großen Rohrbündelreaktoren eine gewisse Zeit dauern wird, bis ein Temperaturausgleich stattgefunden hat zwischen den Apparateteilen, die direkt in Kontakt mit dem Aufwärmmedium stehen und den weiter entfernten Apparateteilen. Hat also ein Reaktor zu Beginn des Anfahrens Umgebungstemperatur und wird in die Reaktionsrohre desselben ein heißes Gas mit einer Temperatur von 400°C eingeleitet, so dehnen sich die Reaktionsrohre stärker aus als der Reaktormantel. Es kann zu unzulässigen Wärmespannungen kommen, die den Reaktor schädigen oder gar zerstören können.

In diesem Zusammenhang ist auch die Aufheizrate - Temperaturerhöhung pro Zeiteinheit - von Interesse. Eine allgemeine Einführung zu diesem Thema ist dem Buch von Klaus H. Weber, "Inbetriebnahme verfahrenstechnischer Anlagen", Springer-Verlag, 1997, 1. Aufl., zu entnehmen. Darin wird das Anfahren einer Anlage als kleiner, aber wichtiger Teil des Inbetriebnahmeprozesses beschrieben. Dabei ist anzustreben, dass alle Anlagenteile möglichst gleichmäßig erwärmt werden, damit sich diese nicht ungleichmäßig erwärmen und unzulässige Wärmespannungen entstehen. Im Kapitel über die Inbetriebnahme der Betriebsmittelsysteme, speziell bei Dampf- und Kondensatsystemen, heißt es dort, dass die Aufheizgeschwindigkeit kalter Rohrleitungen max. 5°C/min, entsprechend 300 °C/h betragen soll. Dies gilt jedoch nur dann, wenn die Rohrleitung über die Länge gleichmäßig erwärmt wird. Bei einem großen Rohrbündelreaktor mit Durchmessern von 6 bis 8 m und einer Länge in gleicher Größenordnung ist diese Aufgabe ungleich schwieriger zu lösen. In einem Anfahrbeispiel einer Gesamtanlage sind in diesem Zusammenhang zwei parallel arbeitende Reaktoren mit einer Katalysatorschüttung beschrieben, die mit einer zulässigen Aufheizgeschwindigkeit von 20°C/h hochgefahren (S. 309 unten) werden.

In der Fig. 3 von EP 1 166 865 A2 sind in einem Diagramm die Temperaturverläufe in den beiden Zonen eines Zweizonen-Reaktors in Abhängigkeit von der Zeit aufgetragen. Dem Diagramm kann man eine Aufheizgeschwindigkeit durch das Temperiergas von ca. 50°C/h entnehmen.

Außerdem ist es unvorteilhaft, den Reaktor auch dann noch mit Gas aufzuheizen, wenn die Schmelztemperatur des Wärmeträger-Salzes schon längst erreicht ist und der Reaktor bereits mit flüssigem Wärmeträger-Salz gefüllt ist. Bei diesem Verfahren nämlich muss zunächst das Gas aufgeheizt werden. In einem zweiten Schritt muss diese Wärme an die Reaktionsrohrinnenwand übertragen werden, also gibt es zwei Wärmeübertragungsprozesse. Wird dagegen das Reaktoraufheizen wie bei einem Reaktor nach DE 2 207 166 B4 mit direkt an dem Reaktor angeschlossenen elektrischen Aufheizer durchgeführt, so wird die elektrische Energie direkt an das Wärmeträger-Salz übertragen, der Aufheizvorgang ist also direkter und schneller. Außerdem gibt es keine Wärmeverluste durch die Rohrleitungen zwischen Zwischenbehälter, außen liegendem Aufheizer und dem Reaktor. Davon abgesehen wird in EP 1 166 865 A2 auf Maßnahmen zur Wärmeisolierung überhaupt nicht eingegangen. Durch die außen liegenden Anlagenteile wie Zwischenbehälter und Aufheizer werden zusätzliche Pumpen notwendig, im Gegensatz zu DE 2 207 166 B4, wo der elektrische Aufheizer allein durch den Anschluss an Stellen im Wärmeträger-Umwälzsystem mit unterschiedlichem Druck durchströmt wird, ohne dass eine zusätzliche Pumpe erforderlich wäre.

Während des normalen Betriebs, zwischen einem unteren und oberen Betriebspunkt, kann es im Wärmeträgersystem zu Temperaturschwankungen kommen, die zu einer Volumenänderung des Wärmeträgers führen. Solche betriebsmäßigen Volumenänderungen werden zweckmäßigerweise durch einen Ausgleichsbehälter aufgenommen, der für diese Volumenänderungen ausgelegt ist. In DE 2 207 166 B4 wird diese Aufgabe auf einfache Weise dadurch gelöst, dass sich der Wärmeträger in einen unmittelbar an die Umwälzpumpe und Kühler angeschlossenen Ausgleichsbehälter ausdehnen kann. Wird die Temperatur des oberen Betriebspunktes überschritten, so wird das Fassungsvermögen des Ausgleichsbehälters überschritten und das Überschussvolumen fließt über eine Überlaufleitung in einen Auffangbehälter oder wieder zurück in den Vorlage-Wärmeträgerbehälter. Fällt die Temperatur unterhalb des unteren Betriebspunktes, so wird das fehlende Wärmeträgervolumen durch Förderung aus dem Vorlage-Wärmeträgerbehälter ausgeglichen.

In EP 1 166 865 A2 ist weiterhin der Aufheizvorgang für einen Mehrzonenreaktor beschrieben. Für die Einstellung unterschiedlicher Temperaturen in den verschiedenen Zonen ist nur ein einziger Zwischenbehälter vorgesehen, aus dem eine Teilmenge zu einem separaten Erhitzer gefördert wird. Für den Aufheizvorgang dieses Reaktorsystems ist ein aufwändiges Mess-, Steuerungs- und Regelungssystem für die Volumenströme und Temperaturen erforderlich. Eine unabhängige Regelung der Volumenströme und Temperaturen ist nur eingeschränkt möglich. Außerdem werden eine gesonderte Fördereinrichtung und viele Verbindungsleitungen zwischen dem Rohrbündelreaktor, dem Zwischenbehälter und dem Erhitzer erforderlich. Zur Begrenzung der Wärmeverluste müssen diese mit isolierten Begleitheizungen ausgestattet werden. Zudem gibt es keinerlei Aussagen zum Anfahren von weiteren Anlagenteilen, wie dem Kühler, der erst nach dem Aufheizen in Betrieb geht.

Beim Abfahren des Reaktors allgemein gibt es sinngemäß eine ähnliche Problematik zu den Temperaturdifferenzen und zur Abkühlungsgeschwindigkeit. Entsprechender druckschriftlicher Stand der Technik ist jedoch nicht bekannt.

Aus dem Stand der Technik sind überwiegend Temperatursteuerungen des Wärmeträgers für den stationären Betrieb bekannt. Bei den vorbekannten Steuerungen für instationäre Temperaturänderungsvorgänge wird nur auf allgemeine Verfahrensweisen eingegangen.

So werden bestimmte Aufheizungsgeschwindigkeiten vorgegeben, z.B. in dem erwähnten Buch "Inbetriebnahme verfahrenstechnischer Anlagen" die weiter oben bereits zitierten 20°C/h, bei denen ein Fachmann jedoch nicht weiß, an welchen Stellen sie einzuhalten sind, und daher auch nicht weiß, wann sie tatsächlich überschritten sind. Denn die Aufwärmung oder Abkühlung eines Reaktors ist kein isothermer Vorgang, sondern stellt sich zeitlich und örtlich stark unterschiedlich ein. Der Reaktor wird dabei von einer Wärme- bzw. Kältewalze durchlaufen, in der die Aufwärmung bzw. Abkühlung sehr schnell erfolgt. Vor und hinter der Walze findet dagegen kaum noch eine Aufwärmung oder Abkühlung statt.

Auf die Problematik, dass Teile des Reaktorsystems durch zu unterschiedliche Wärmeausdehnungen in Folge von zu großen Temperaturdifferenzen Schaden nehmen können, wird kaum eingegangen, Hinweise zur Vermeidung solcher Schäden fehlen völlig. Zudem wird im Stand der Technik das An- und Abfahren direkt an den Rohrbündelreaktor angeschlossener Nebenaggregate nicht berücksichtigt.

Hier nun soll die Erfindung Abhilfe schaffen. Ihr liegt die Aufgabe zu Grunde, die Temperaturdifferenzen bei einem Rohrbündelreaktor, insbesondere bei einem salzbadgekühlten Rohrbündelreaktor, während der instationären Zeitabschnitte beim Anfahren und beim Abfahren so zu begrenzen, dass unzulässige Wärmespannungen weitestgehend vermieden werden und dabei das Aufheizen und Abkühlen möglichst rasch erfolgt.

Erfindungsgemäß wird diese Aufgabe bei einem Verfahren der eingangs genannten Art dadurch gelöst, dass die Temperatur des Temperiergases bei dessen Eintritt in die Reaktionsrohre beim Anfahren nach oben und beim Abfahren nach unten und/oder der Volumenstrom des Temperiergases nach oben so begrenzt werden, dass über jeden Zeitraum, der mit dem ersten Einleiten des Temperiergases beginnt, die zeitlich gemittelte Änderungsgeschwindigkeit der Temperatur des Temperiergases bei dessen Austritt aus den Reaktionsrohren 30°C/h nicht überschreitet.

Die Unteransprüche geben darüber hinausgehend vorteilhafte Verfahrensvarianten an.

Durch die erfindungsgemäßen Maßnahmen werden beim An- und Abfahren von Rohrbündelreaktoren zu hohe thermische Belastungen sicher vermieden. Die thermischen Belastungen auf den Rohrbündelreaktor sind dabei während dieser beiden Vorgänge im Wesentlichen gleich, so dass die Bedingungen des erfindungsgemäßen Verfahrens sowohl für das Aufheizen als auch für das Abkühlen gelten.

Das Einhalten der erfindungsgemäß zeitlich gemittelten Änderungsgeschwindigkeit der Temperatur des Temperiergases am Austritt aus den Reaktionsrohren stellt sicher, dass bei möglichst schnellem Aufheizen und Abkühlen die Aufheiz- bzw. Abkühlgeschwindigkeit sowohl in Längs- als auch in Radialrichtung des Reaktors ausreichend gering ist, um unzulässige Wärmespannungen zu vermeiden. Dieses gilt auch, wenn direkt an den Rohrbündelreaktor Nebenapparate angeschlossen sind.

Die Temperaturdifferenzen zwischen den Teilen innerhalb eines Reaktors oder die Temperaturdifferenzen in den die Reaktorteile berührenden Medien werden auf ein Maß begrenzt, welches unzulässig hohe Temperaturspannungen in Folge zu großer unterschiedlicher Temperaturdehnungen vermeidet.

Die Änderungsgeschwindigkeit der Temperiergas-Temperatur am Austritt aus den Reaktionsrohren wird mit Hilfe der Temperatur und/oder dem Volumenstrom beeinflusst, mit der bzw. dem das Temperiergas in die Reaktionsrohre eintritt. Dabei wird die Eintrittstemperatur des Temperiergases sowie der Volumenstrom zu Beginn des Anfahrens oder des Abfahren auf ein unkritisches Maß begrenzt.

Dadurch, dass das erfindungsgemäße Verfahren Messgrößen und Messorte eindeutig vorschreibt - Temperatur und/oder Volumenstrom des Temperiergases am Eintritt in die Reaktionsrohre und zeitlich gemittelte Änderungsgeschwindigkeit der Temperiergas-Temperatur am Austritt aus den Reaktionsrohren - , wobei die Messgrößen direkt oder indirekt gemessen werden können, kann der Fachmann während des Anfahr- oder Abfahrvorganges auf einfache und sichere Weise feststellen, ob er sich hinsichtlich der thermischen Belastungen im sicheren oder unsicheren Bereich bewegt.

Durch das erfindungsgemäße Verfahren ist es möglich, das Reaktorsystem einerseits rasch, aber in Bezug auf unzulässige Wärmespannungen schonend und sicher an- und abzufahren. In der Folge können mehr Lastzyklen gefahren werden, die Lebensdauer wird erhöht. Weiterhin vereinfacht sich die apparative Ausrüstung für das Reaktorsystem durch nur einen Ausgleichsbehälter, der den sich bei steigenden Temperaturen ausdehnenden Wärmeträger aufnimmt. Auf einen gesonderten Speicherbehälter kann verzichtet werden.

Durch die Begrenzung der zeitlich gemittelten TemperaturÄnderungsgeschwindigkeit des Temperiergases kann auch der Aufheizer entsprechend genauer dimensioniert werden, was unter Umständen Investitionskosten spart.

Das erfindungsgemäße Verfahren kann sowohl bei einzonigen als auch bei mehrzonigen Reaktoren angewendet werden.

Mit dem erfindungsgemäßen Verfahren kann grundsätzlich jedes aus dem Stand der Technik bekannte Reaktorsystem betrieben werden. Insbesondere ist es für katalytische exotherme oder endotherme Gasphasenreaktionen geeignet, ganz besonders für die in den Ansprüchen 15 und 16 aufgezählten. Die Art des Prozesses ist hierbei unwesentlich, da das Verfahren auf die instationären Zeitabschnitte während des Anfahrens und Abfahrens gerichtet ist. Nachfolgend wird das erfindungsgemäße Verfahren im Zusammenhang mit der Anwendung auf ein Reaktorsystem für exotherme Gasphasenreaktionen weiter beschrieben, obgleich die Anwendung des erfindungsgemäßen Verfahrens auf Reaktorsysteme für endotherme Gasphasenreaktionen ebenso gut möglich ist. Die Hauptkomponenten eines solchen Reaktorsystems sind im Wesentlichen ein Reaktor und seine Peripherieaggregate. Unter Peripherieaggregaten sind alle außerhalb des Reaktors angeordneten Apparate und Maschinen zu verstehen, die zu seinem Betrieb notwendig sind, wie Umwälz- und Fördereinrichtungen sowie Wärmetauscher, im speziellen eine Umwälzeinrichtung zur Umwälzung eines im Betrieb flüssigen Wärmeträgers, ein Aufheizer zum temporären Aufheizen des Reaktorsystems, ein Kühler zur Abfuhr der im Reaktor erzeugten Reaktionswärme, ein Ausgleichsbehälter, ein Salztank sowie eine Gasbehandlungsvorrichtung, mit welcher ein Temperiergas bzw. ein Reaktionsgasgemisch hergestellt und oder temperiert wird.

Die Peripherieaggregate können dabei nach konstruktiven, prozesstechnischen oder wirtschaftlichen Aspekten unterschiedlich ausgeführt und angeordnet werden. Insbesondere bei sehr großen Rohrbündelreaktoren kann es aus Gründen der Größe, des Gewichts, des Wirkungsgrades, der besseren Verteilung des Wärmeträgers oder aus anderen Gründen notwendig werden, die Leistung eines oder mehrerer Peripherieaggregate auf zwei oder mehr Einheiten aufzuteilen. Gegebenenfalls werden zusätzliche Einrichtungen zur Strömungsbeeinflussung und/oder Leitungen vorgesehen.

Auch bezüglich weiterer Aspekte, wie Material, Ausführungseinzelheiten sowie Anwendungen ist der bei dem erfindungsgemäßen Verfahren verwendete Reaktor nicht beschränkt. Alle Komponenten und Konstruktionsdetails sind auf den Einzelfall abzustimmen.

Ein Rohrbündelreaktor weist eine Vielzahl von katalysatorgefüllten Reaktionsrohren auf, die zu einem Rohrbündel zusammengefasst sind. Das Rohrbündel hat zumeist einen kreisförmigen Querschnitt, jedoch ist auch ein rechteckiger oder anderer Querschnitt möglich. Die Reaktionsrohre enden abdichtend in einem oberen Rohrboden und in einem unteren Rohrboden. Das Rohrbündel ist von einem isolierten Mantel umschlossen, welcher mit dem oberen Rohrboden und mit dem unteren Rohrboden verbunden ist. Gegebenenfalls verfügt der Mantel über Kompensatoren zur Aufnahme von Temperaturspannungen. Der obere Rohrboden wird von einer oberen Haube mit einem Gaseintrittsstutzen, der untere Rohrboden wird von einer unteren Haube mit einem Gasaustrittsstutzen umspannt.

Die in den Reaktionsrohren entstehende Reaktionswärme wird von einem den Mantelraum des Reaktors durchströmenden Wärmeträger abgeführt. Dieser wird über Verteilerkanäle in den Rohrbündelreaktor hineingeführt. Hat der Rohrbündelreaktor einen Kreisquerschnitt, so sind die Verteilerkanäle meist als Ringkanäle ausgebildet. Für einen guten Wärmeübergang wird der Wärmeträger meist mit mehreren senkrecht zu den Reaktionsrohren stehenden Umlenkblechen quer zu den Reaktionsrohren geführt. Im einfachsten Fall haben diese Umlenkbleche abwechselnd angebrachte Durchtrittsöffnungen, wodurch der Wärmeträger jeweils immer von einem Ende des Rohrbündels zum anderen Ende geführt wird. Bei großen Reaktionsapparaten mit mehreren Metern im Durchmesser führt dies jedoch zu einer ungleichmäßigen Wärmeabfuhr, weshalb üblicherweise ringförmige und scheibenförmige Umlenkbleche vorgesehen werden, die den Wärmeträger mäanderförmig durch das Rohrbündel führen. Das Rohrbündelinnere ist dabei meist unberohrt, um dem Wärmeträger Raum zu geben für die Durchströmung radial von innen nach außen und umgekehrt. Entsprechend wird ein Strömungsraum zwischen Außenbegrenzung des Rohrbündels und Mantel frei gelassen.

Ein einzoniger Reaktor lässt sich bezüglich seiner Funktionseinheiten in drei Abschnitte unterteilen. Der Reaktorhauptteil A weist den Reaktormantel, das Rohrbündel, den unteren Rohrboden, den oberen Rohrboden und die an den Mantel angeschlossenen Verteilerkanäle auf. An einem Ende, üblicherweise dem oberen Ende, des Reaktorhauptteils A schließt sich der Gaseintrittsteil B an, gebildet aus der oberen Haube mit Gaseintrittsstutzen. Am anderen, üblicherweise unteren Ende schließt sich der Gasaustrittsteil C an, gebildet aus der unteren Haube mit Gasaustrittsstutzen. Falls die Reaktionsgasströmung von unten nach oben erfolgt, sind die Gasein- und Gasaustrittshaube entsprechend vertauscht.

Im weiteren wird eine Gasströmung von oben nach unten im Reaktor angenommen. Eine Gasströmung ist jedoch auch in umgekehrter Richtung möglich. Dafür sind sinngemäß die Ein- und Austrittsseiten zu vertauschen.

Der bezüglich Temperaturspannungen kritische Teil ist der Reaktorhauptteil A. Es wurde gefunden, dass die größten Temperaturdifferenzen zwischen Rohrbodenoberkante und dem am anderen Ende des Reaktors gelegenen Verteilerkanal liegen. Zur Kontrolle der Temperaturen und insbesondere zur Ermittlung der größten Temperaturdifferenzen werden über den gesamten Reaktor eine Vielzahl von Temperaturmessstellen angeordnet. Mindestens jedoch werden Temperaturmessstellen für das in den Reaktor ein- bzw. austretende Gas im Gaseintrittsstutzen und im Gasaustrittsstutzen angeordnet sowie im dem Gaseintrittsstutzen gegenüber gelegenen Verteilerkanal für den Wärmeträger und am eintrittseitigen Rohrboden. Ersatzweise für die Rohrbodentemperatur kann auch die Temperatur im Gaseintrittsstutzen verwendet werden. Die mit diesem Verfahren ermittelte Temperaturdifferenz ist etwas größer als die tatsächlich vorliegende. Dies ist kein Nachteil, da man dadurch zusätzliche Sicherheit gewinnt.

Der Fortschritt des Temperaturänderungsprozesses wird weiterhin durch mindestens ein innerhalb des Rohrbündels gelegenes Thermorohr, in dem sich mindestens eine Temperaturmessstelle befindet, kontrolliert. Meist sind in einem Reaktor zwei unterschiedliche Typen von Thermorohren angeordnet sein, solche zur betriebsmäßigen Erfassung der Reaktionsgastemperatur längs eines Reaktionsrohres und solche zur betriebsmäßigen Erfassung der Wärmeträgertemperatur entlang eines Reaktionsrohres. Solches Thermorohr kann beispielsweise so ausgeführt sein, dass längs darin mehrere Thermoelemente angeordnet sind. Eine solche Messeinrichtung ist auch als so genanntes "Multipoint-Thermoelement" bekannt. Die Messsignale der Thermoelemente werden mit einem Signalkabel aus dem Reaktor herausgeführt. Zweckmäßig ist ein Schutzrohr zwischen oberem Ende des Thermorohrs und der Reaktorwand. Bevorzugt wird das Signalkabel über einen dafür vorgesehenen Stutzen aus dem Reaktor heraus geführt. Das Thermorohr zur Wärmeträgertemperaturmessung ist an seinem unteren Ende geschlossen und der Zwischenraum zwischen den Thermoelementen und der Innenwand des Thermorohrs mit einem gut Wärme leitenden Material ausgefüllt, beispielsweise mit Aluminiumgranulat mit einer Partikelgröße zwischen 0,5 mm und 2,5 mm.

Die meisten Gasphasenreaktionen erfordern eine spezifische Temperatur oder gegebenenfalls ein spezifisches Temperaturprofil entlang der Reaktionsrohre für optimale Ergebnisse bezüglich Ausbeute und Selektivität. Daher kommt der Temperatursteuerung mit einem Wärmeträger, welcher die Reaktionsrohre temperiert, eine besondere Bedeutung zu. Für diese Aufgabenstellung ist eine Vielzahl von Wärmeträgern geeignet.

Das optimale Temperaturniveau von exothermen Gasphasenreaktionen liegt meistens recht hoch. Wird die Reaktionswärme an einen verdampfenden Wärmeträger abgegeben, so ist zwar der Wärmeübergang außerordentlich gut. Nachteilig ist jedoch, dass die Temperatur im Reaktor im Wesentlichen überall gleich ist. Dadurch lässt sich kein Temperaturprofil einstellen. Außerdem ist die Verdampfungstemperatur druckabhängig und es ergeben sich schnell Drücke, die zu unwirtschaftlichen Wandstärken führen.

Man ist in solchen Fällen bestrebt, Wärmeträger einzusetzen, die einen niedrigen Dampfdruck haben, bei hohen Temperaturen noch flüssig sind und thermisch stabil sind. Diese Forderungen werden von einer Reihe von ionischen Flüssigkeiten erfüllt. Solche ionischen Flüssigkeiten sind z.B. in DE 103 16 418 A1 näher beschrieben. Sie sind für den Einsatz in Rohrbündelreaktoren für exotherme Gasphasenreaktionen zwar grundsätzlich geeignet. Wegen der hohen Kosten sind diese jedoch noch wenig verbreitet.

Alternativen zu solchen ionischen Flüssigkeiten sind Salzmischungen aus Carbonaten oder Nitriten/Nitraten. Diese Stoffe haben den Vorteil großer thermischer Stabilität. Zudem sind sie deutlich preiswerter als ionische Flüssigkeiten, was besonders bei großen Reaktoren mit mehreren Metern Durchmesser und Länge eine entscheidende Rolle spielt. Das Salz kann unterschiedlich zusammengesetzt sein und hat entsprechend unterschiedliche Schmelzpunkte. Für das erfindungsgemäße Verfahren kann jede Art Salz mit einem Schmelzpunkt in dem vorgenannten Bereich unabhängig von der Zusammensetzung verwendet werden. Bevorzugt werden Wärmeträger mit einem Schmelzpunkt im Bereich zwischen 100 und 450°C. Besonders bevorzugt wird eine Mischung aus Kaliumnitrat, Natriumnitrat und Natriumnitrit mit vorzugsweise eutektischer Zusammensetzung. Diese Mischung ist als "HTS"-Salz (high temperature salt) bekannt. Sie hat einen Schmelzpunkt von ca. 142°C. Im Rahmen dieser Anmeldung werden die Begriffe Wärmeträger und Salz gleichbedeutend verwendet.

Im Vergleich zu anderen Arten von Wärmeträgern, die für die Temperaturregelung einer chemischen Reaktion verwendet werden, ist dieses Salz besonders vorteilhaft, da es sich durch thermische Stabilität auszeichnet und die höchste Stabilität bezüglich der Wärmeübertragung bei hohen Temperaturen im Bereich bis zu 350 - 550°C aufweist.

Zur Umwälzung des Salzes im Reaktor ist es notwendig, den Wärmeträger für ein gutes Fließverhalten auf einer Temperatur über dem Schmelzpunkt zu halten. Zu diesem Zweck wird das Wärmeträgermedium bevorzugt außerhalb des Reaktors aufgeheizt und mit erhöhter Temperatur dem Reaktor zugeführt. Damit dieser nicht abkühlt, andernfalls besteht die Gefahr des Erstarrens, muss dieser erstens eine ausreichende Temperatur über dem Schmelzpunkt besitzen. Zweitens muss der Reaktor auf mindestens Schmelztemperatur vorerwärmt sein. Drittens müssen die Verbindungsleitungen wärmeisoliert und beheizt sein. Viertens muss der Einfüllvorgang rasch erfolgen und fünftens muss der in den Reaktor eingefüllte Wärmeträger gut umgewälzt und mit einem Aufheizer auf Temperatur gehalten oder weiter erhitzt werden. Bei den dabei durchgeführten Aufheizvorgängen darf der Reaktor nicht zu schnell erwärmt werden, damit sich der Reaktor nicht ungleichmäßig erwärmt und es dabei zu unzulässigen Wärmespannungen kommt. Diesem Zwecke dienen die nachfolgend beschriebenen Einrichtungen und Verfahrensschritte.

Der Wärmeträger wird mit einer Umwälzeinrichtung im Kreislauf durch das Reaktorsystem gefördert. Die Umwälzeinrichtung ist zumeist eine Pumpe mit Axiallaufrad, welche den Wärmeträger zur Vermeidung von Kavitation bevorzugt von oben nach unten fördert. Der Hauptstrom des Wärmeträgers wird über eine kurze untere Reaktorzuleitung zum Reaktor gefördert. Über einen unteren Verteilerkanal wird er am Reaktor verteilt. Durch entsprechend gestaltete untere Mantelöffnungen wird der Wärmeträger gleichmäßig über den Reaktorumfang verteilt. Hat der Reaktor einen kreisförmigen Querschnitt und wird der Wärmeträger wie weiter oben beschrieben gleichmäßig über den Umfang von außen nach innen und wieder von innen nach außen geführt, so sind die Mantelöffnungen entsprechend dem Strömungsdruck so dimensioniert, dass der Wärmeträger über den Umfang gleichmäßig über den äußeren Mantelraum des Reaktors geführt wird. Nach Durchlaufen des Reaktors tritt das flüssige Salz in analoger Weise wie beim Einströmen in den Reaktor aus dem Reaktor durch obere Mantelöffnungen wieder aus in einen oberen Verteilerkanal. Über eine obere Reaktorableitung gelangt der Wärmeträger wieder in den Eingangsbereich der Umwälzeinrichtung. Handelt es sich um einen exothermen Prozess, wird ein Wärmeträgerstrom in einem Kreislauf über eine kurze Verbindungsleitung zu einem Kühler gefördert. Die Menge dieses Wärmeträgerstroms wird mit einem Regelventil eingestellt. Der gekühlte Wärmeträger gelangt wieder über eine kurze Rohrleitung in den Eingangsbereich der Umwälzeinrichtung, wo er zusammen mit dem vom Rohrbündelreaktor kommenden Hauptstrom in die Umwälzeinrichtung zurück strömt. Dort wird der vom Rohrbündelreaktor kommende erhitzte Wärmeträgerstrom und der vom Kühler kommende gekühlte Wärmeträgerstrom von der Umwälzeinrichtung gemischt und weiter gefördert. Zusätzlich noch können statische Mischer vor und/oder nach der Umwälzeinrichtung angeordnet werden, um die Temperaturverteilung des Wärmeträgers weiter zu vergleichsmäßigen.

An den unteren Verteilerkanal und an den oberen Verteilerkanal des Reaktors ist weiterhin ein Aufheizer für den Wärmeträger über eine kurze Aufheizerzuleitung und eine obere Aufheizerableitung angeschlossen. Der Aufheizer dient zum Hochheizen und Temperaturhalten beim Anfahren des Reaktors und bei endothermen Prozessen zum Zuführen der Reaktionswärme. Gegebenenfalls kann der Salzstrom durch den Aufheizer noch über ein Regelventil eingestellt werden. Der Aufheizer kann auf verschiedene Arten betrieben werden. Er kann ein mit Dampf oder Rauchgas beheizter Wärmetauscher sein oder er ist befeuert. Bevorzugt wird der Aufheizer als Elektroaufheizer, kurz E-Aufheizer, ausgeführt. Ist die Umwälzeinrichtung in Betrieb, so strömt ein Teilstrom des Wärmeträgers zum Aufheizer. Nach der Aufheizung gelangt der erhitzte Wärmeträger wieder in den Reaktor zurück. Die Durchflussmenge kann dabei durch ein Regelventil verändert werden. Auf dieses Regelventil kann jedoch aus Erfahrung der Praxis ohne Nachteil verzichtet werden.

Bei exothermen Prozessen und zum raschen Abkühlen des Reaktors wird Wärme durch einen Kühler abgeführt. Die Art dieses Kühlers ist grundsätzlich nicht eingeschränkt. Er kann z.B. ein gasgekühlter Wärmetauscher sein, wobei das kühlende Gas z.B. das Reaktionsgas oder Umgebungsluft sein kann, oder er kann mit einer Flüssigkeit gekühlt werden, z.B. in einer Ausführung als Speisewasservorwärmer. Der Kühler kann weiterhin als Überhitzer von Dampf eines Dampfkreislaufs ausgeführt sein. In einer bevorzugten Ausführungsform ist der Kühler als Dampferzeuger ausgeführt, d.h. dem Wärmeträger wird Wärme durch Verdampfung eines flüssigen Verdampfungsmediums, i.d.R. Wasser, entzogen.

Zur Begrenzung von Druck- und Wärmeverlusten ist der Kühler vorzugsweise mit kurzen Verbindungsleitungen an die Umwälzeinrichtung oder an den Reaktor angeschlossen. Als Dampferzeuger weist der Kühler bevorzugt ein Bündel von Verdampferrohren auf, welches an seinen beiden Enden durch Rohrböden dichtend abgeschlossen wird. Der obere Kühlerrohrboden wird von einer oberen Kühlerhaube umschlossen, der untere Kühlerrohrboden von einer unteren Kühlerhaube. Der obere Kühlerrohrboden ist durch ein Verbindungsgehäuse fest am Ausgleichsbehälter verbunden, der untere Kühlerrohrboden ist axial in einem Kühlergehäuse frei beweglich. Das Speisewasser wird über eine Speisewasserleitung zugeführt. Sie führt durch den oberen Kühlerrohrboden und mündet in eine untere Kühlerhaube. Der Wärmeträger umströmt die Verdampferrohre und bringt das in den Verdampferrohren befindliche Wasser teilweise zum Verdampfen. Dabei wird der Wärmeträger mit Umlenkblechen quer zu den Verdampferrohren geführt, um einen möglichst guten Wärmeübergang zu erreichen. Die Umlenkbleche können mit abwechselnd an der Seite angebrachten Durchtrittsöffnungen ausgeführt sein oder ring- und scheibenförmig Umlenkbleche haben.

Sind noch andere nahe gelegene Dampferzeuger in der Produktionsanlage vorhanden, so wird das Wasser-Dampf-Gemisch in der Regel in eine zentrale Dampftrommel geführt. Der von Flüssigkeit befreite Dampf wird dabei in einem Dampfnetz genutzt, die abgeschiedene Flüssigkeit wird als Teil des Speisewassers wieder zurück in den Dampferzeuger geführt. Mit Vorteil werden die Anlagenteile so bemessen, dass das Wasser-Dampf-Gemisch bzw. das Speisewasser im Naturumlauf geführt wird, d.h. die Auftriebskraft reicht alleine aus, um zur Vermeidung von Überhitzungen eine ausreichend hohe Umlaufzahl zu erreichen. Gesonderte Umwälzeinrichtungen werden nicht benötigt.

Lohnt eine zentrale Dampftrommel nicht, so wird in einer bevorzugten Ausführungsform eine Dampfabscheidevorrichtung in den Kühler integriert. Hierzu wird an den oberen Kühlerrohrboden ein zylindrisches Kühlergehäuse angesetzt. Daran schließt sich eine obere Kühlerhaube mit Dampfaustrittsstutzen an. Bei dieser Konstruktion strömt das in den Verdampferrohren erzeugte Wasser-Dampf-Gemisch zunächst in einen Sammelraum, welcher nach oben hin durch eine Trennplatte abgeschlossen ist. Das Speisewasser wird über eine Speisewasserleitung in den Flüssigkeitsraum über der Trennplatte geführt, von wo es über ein Kühler-Verbindungsrohr in den Raum der unteren Kühlerhaube strömt. Die Speisewasserleitung kann teilweise auch direkt in diesen Raum weiter geführt werden. Ebenfalls durch dieses Verbindungsrohr wird eine Sumpfabzugsleitung geführt, welche bei Bedarf Ablagerungen am Boden der unteren Kühlerhaube absaugt. Über eine Oberflächenentschlammungsleitung werden eingetragene Schwimmstoffe entfernt. Das im Sammelraum befindliche Wasser-Dampf-Gemisch steigt über eine Öffnung in der Trennplatte in einen Grobabscheider. Eine bevorzugte Bauart eines solchen Grobabscheiders ist ein Zyklonabscheider, wie er z.B. in CH 515 734 beschrieben ist. Der abgeschiedene Dampf wird in einem Feinabscheider von Feinsttropfen befreit und verlässt den Kühler über den Dampfaustrittsstutzen. Als Feinabscheider kommen alle handelsüblichen und entsprechend dimensionierte Tropfenabscheider in Frage, wie z.B. Lamellenabscheider oder Gewebe. Im Rahmen dieser Erfindung wird bevorzugt ein Edelstahl-Gewebe eingesetzt. Die flüssige Phase läuft in den Flüssigkeitsraum zurück. Der Flüssigkeitsstand wird über Messstutzen gemessen und über die Menge des zugeführten Speisewassers geregelt.

Die Anzahl der Zyklonabscheider wird aus wirtschaftlichen Gründen so gering wie möglich gehalten. Sie steht in Abhängigkeit von der Dampfmenge, der umlaufenden Wassermenge, dem Druck, der Umlaufzahl als Verhältnis von erzeugtem Dampfmassenstrom zum Wassermassenstrom und dem optimalen Arbeitsbereich eines Zyklonabscheiders.

Nach dem Durchlaufen des Dampferzeugers strömt der gekühlte Wärmeträger in den Eingang der Umwälzeinrichtung zurück. Zusammen mit dem aus einer kurzen Austritts-Verbindungsleitung aus dem Reaktor kommenden erhitzten Wärmeträger tritt er in die Umwälzeinrichtung ein, wird dort weitergefördert und intensiv mit dem Wärmeträger-Hauptstrom vermischt.

Mit steigender Temperatur nimmt das Volumen des Wärmeträgers Salz zu. Dieses zusätzliche Volumen entweicht in einen Ausgleichsbehälter. Die Größe des Ausdehnungsgefäßes richtet sich dabei nach der Menge des durch die Erwärmung entstehenden zusätzlichen Salzvolumens und der Maximaltemperatur. Es braucht jedoch nicht das gesamte durch die Temperaturerhöhung entstehende Zusatzvolumen aufzunehmen. Ist das Fassungsvermögen des Ausgleichsbehälters erreicht, so läuft der Wärmeträger über eine Überlaufleitung an einen sicheren Ort mit ausreichendem Fassungsvermögen oder direkt in den Salztank wieder zurück.

Eine kompakte Konstruktion wird erreicht, indem der Ausgleichsbehälter als Zusatzraum innerhalb der Umwälzeinrichtung und/oder des Kühlers oder des Aufheizers angeordnet wird. Durch jeweils eine Wärmeträger- und eine Gasverbindungsleitung können mehrere Räume zu einem zusammengeschlossen werden. Er ist an mindestens einer Verbindungsstelle mit dem umgewälzten Wärmeträger in Strömungsverbindung. Entgasungsstellen am Hochpunkt oder auch an anderen Stellen des Wärmeträger-Mantelraums im Reaktor können über Leitungen mit dem Ausgleichsbehälter verbunden sein.

Im Ausgleichsbehälter ist eine Füllstandsmessung angeordnet, um auf kritische Füllstände reagieren zu können. Diese Füllstandsmessung arbeitet bevorzugt nach dem Gaseinperlverfahren. Bevorzugt wird Stickstoff als Betriebsgas verwendet. Hierbei ergibt sich der Flüssigkeitsstand aus dem Gegendruck des austretenden Gases. Gleichzeitig wirkt der Stickstoff als Schutzgas für das Salz, welches im Übrigen im gesamten Reaktorsystem mit Stickstoff überlagert wird. Reicht diese Stickstoffleitung nicht aus, so wird der Stickstoff über eine gesonderte Leitung herangeführt.

Bei bestimmten Flüssigkeitsständen werden entsprechende Maßnamen ausgelöst. Ein charakteristischer Flüssigkeitsstand ist der betriebsmäßig größte Flüssigkeitsstand, welcher hier mit "HL" bezeichnet wird. Bei Erreichen dieses Flüssigkeitsstandes fließt der überschüssige Wärmeträger über einen Überlauf/Notentlastungsstutzen und eine sich anschließende Überlaufleitung entweder an einen sicheren Ort mit ausreichendem Fassungsvermögen oder wieder in den Salztank zurück. Außerdem kann ein Alarm ausgelöst werden. Steigt die Flüssigkeit schneller als sie abfließt und erreicht sie das Niveau "HHL", so wird die Anlage automatisch heruntergefahren. Im anderen Fall, wenn der Flüssigkeitsspiegel auf einen Wert unter "LL" sinkt, wird Alarm ausgelöst um auf eine erforderliche Nachspeisung aus dem Salztank hinzuweisen. Wird das minimal zulässige Niveau "LLL" erreicht, so wird die Anlage automatisch heruntergefahren. Das Niveau "LLL" liegt über der Unterkante des oberen Rohrbodens des Reaktors.

Der Notentlastungsstutzen wird nicht nur bei übermäßiger Ausdehnung des Wärmeträgers genutzt, sondern auch für die - wenn auch eher unwahrscheinlichen - Fälle, in denen z.B. ein Rohr eines Verdampfungskühlers reißt. In einem solchen Fall drückt das Wasser-Dampf-Gemisch in den Salzraum und verdampft dort sehr schnell. Das dabei entstehende Gemisch aus Wasser, Dampf und flüssigem Salz kann sicher über besagten Notentlastungsstutzen abgeführt werden.

Der Wärmeträger Salz wird erstmalig als Pulver oder Granulat in den Salztank eingefüllt. Beim Anfahren des Reaktorsystems wird das Salz durch eine Heizung aufgeschmolzen, die im Salztank und/oder an dessen Außenseite angebracht ist. Die Art der Heizung ist dabei nicht festgelegt. Sie kann z.B. dampfbetrieben sein oder elektrisch betrieben sein. Bis zu diesem Zeitpunkt ist das übrige Reaktorsystem noch frei von Salz und hat Umgebungstemperatur. Ab dem Zeitpunkt, wo das Salz aufgeschmolzen und pumpfähig ist, kann es mit einer Salztankpumpe über eine Rücklaufleitung im Kreislauf gefahren werden, um den Aufschmelzvorgang zu vergleichmäßigen und zu beschleunigen. Der Salztank ist über mehrere Salzverbindungsleitungen mit den einzelnen Komponenten des Reaktorsystems verbunden. Die Salzverbindungsleitungen besitzen jeweils ein Absperrventil. Da die zum Betrieb eines großen Rohrbündelreaktors notwendige Salzmenge entsprechend groß sein kann und die Heizeinrichtung am Salztank wegen ihres seltenen Einsatzes aus wirtschaftlichen Gründen relativ klein gehalten wird, kann der Aufschmelz- und Aufheizvorgang mehrere Tage dauern.

Beim Anfahren wird in einer Gasbehandlungsvorrichtung zunächst ein geeignetes Temperiergas mit einem Verdichter oder Gebläse zu einem Gaserhitzer gefördert, welcher sich im Hauptstrom oder in einem Bypass zur Gashauptleitung befindet. Die Gasführung erfolgt dann mit entsprechenden Gasabsperrarmaturen. Die Temperatur des Temperiergases kann zusätzlich in einem Gasmischer vergleichmäßigt werden. Sobald der Reaktor Betriebstemperatur hat, können die umzusetzenden Reaktionsgaskomponenten über eine Zufuhrleitung dem Gasstrom zugesetzt werden, die dann in einem oder mehreren Gasmischern mit dem Gasstrom vergleichmäßigt werden. Zunächst jedoch durchströmt das Temperiergas während des Aufheizvorgangs die Gasräume des Reaktors. Das Aufheizen erfolgt dabei mit den erfindungsgemäßen Bedingungen zu den Temperaturniveaus und den Temperaturdifferenzen. Hat der Reaktor eine bestimmte Temperatur erreicht, so werden isolierte Begleitheizungen an Pumpengehäuse, Aufheizer, Kühlergehäuse und den Verbindungsleitungen untereinander und zum Salztank in Betrieb genommen.

Sämtliche Peripherieaggregate, die nicht anderweitig beheizbar sind, als auch die verbindenden Leitungen sind mit einer beheizten Isolierung ausgestattet. Bevorzugt wird Dampf als Heizmedium eingesetzt, da dieser Energieträger üblicherweise über ein Dampfnetz leicht verfügbar ist.

Ist das Reaktorsystem genügend über der Schmelztemperatur des Salzes vorgewärmt und liegt die Temperatur des Salzes im Salztank bei Salzeinfülltemperatur, so wird mit dem Füllen des Reaktorsystems mit flüssigem Salz begonnen. Das Füllen kann entweder über eine Pumpe, bevorzugt eine Tauchpumpe erfolgen, die in die flüssige Salzschmelze im Tank eingetaucht ist. Die Änderung des Gasvolumens im Salztank wird dabei durch die Überlaufleitungen vom Reaktorsystem her ausgeglichen. Oder zum Füllen wird ein Gasüberdruck, bevorzugt durch Stickstoff erzeugt, im Gasraum des Tanks genutzt. Dazu muss der Tank als entsprechender Druckbehälter ausgeführt sein und die Entlüftungen des Tanks und die Überlaufleitungen, die in den Tank münden, absperrbar sein. Vor dem Füllen müssen die Absperrventile in den Füllleitungen entsprechend geöffnet werden und eventuelle Bypassleitungen verschlossen werden. Während des Füllvorgangs wird der Flüssigkeitsstand des Wärmeträgers im Ausgleichsbehälter des Reaktors mit der Füllstandsmessung gemessen. Zeigt diese einen Mindestfüllstand an, so wird die Salzzufuhr durch Schließen der Absperrventile beendet und die Salztankpumpe, falls verwendet, ausgeschaltet. Durch entsprechende Belüftungsöffnungen der Füllleitungen zum Tank wird ein selbstständiges Leerlaufen der Füllleitungen ermöglicht. Dafür ist es auch zwingend notwendig, die Leitungen mit stetigem Gefälle vom Reaktorsystem zum Tank hin zu verlegen. Gleichzeitig oder zeitlich versetzt wird die Zufuhr des Temperiergases eingestellt, ebenso die Dampfbegleitheizungen mit Ausnahme der Entleerungs- und Überlaufleitungen. Die Umwälzeinrichtung und der Aufheizer werden in Betrieb genommen. Mit der vorhergehenden Freigabe der optionalen Absperrarmatur wird der Weg des mit dem Aufheizer erhitzten Wärmeträgers zum Reaktor freigegeben. Das Messprinzip der Füllstandsmessung ist bevorzugt das Gaseinperlverfahren. Hierbei wird Inertgas, im Falle des hier verwendeten Salzes bevorzugt Stickstoff, in das Salz eingeperlt und über die Druckdifferenz der Höhenstand des flüssigen Salzes bestimmt. Dabei wird gleichzeitig erreicht, dass der über dem flüssigen Salz befindliche Gasraum mit Stickstoff gefüllt wird, um Zersetzungserscheinungen des Salzes entgegenzuwirken. Wird ein anderes Messprinzip verwendet, kann der Stickstoff auch über eine oder mehrere separate Stickstoffleitung zugeführt werden.

Mit Vorteil kann dieses Verfahren auch bei Mehrzonenreaktoren eingesetzt werden, deren Mantelraum durch mindestens eine Trennplatte in mindestens zwei Mantelräume getrennt ist. Ein Mantelraum eines solchen Reaktors wird im Folgenden als "Zone" bezeichnet und entsprechend ein Reaktor mit mindestens zwei solcher Zonen als "Mehrzonenreaktor". In einem solchen Mehrzonenreaktor kann in jeder Zone eine andere Temperatur eingestellt werden und so die Bedingungen einer Reaktion optimal eingestellt werden. Beispielsweise werden solche Mehrzonenreaktoren bei Reaktionen eingesetzt, bei denen das Reaktionsgasgemisch möglichst verzögerungsfrei gekühlt werden muss, um eine unerwünschte Weiterreaktion oder die Bildung von Nebenprodukten zu unterbinden. In solchen Fällen wird der letzte Teil der Reaktionsrohre mit einem Wärmeträger niedrigerer Temperatur besonders gekühlt. Dabei kann entweder ein gekühlter Teilstrom aus dem Hauptkreislauf verwendet werden oder ein gesonderter Wärmeträgerkreislauf vorgesehen werden. Auch ist der Anschluss einer gesonderten Nachkühlereinheit möglich mit einem eigenen Rohrbündel. Durch diese funktionelle Trennung kann dieser Nachkühler für seine Funktion optimiert gestaltet werden. Beispielsweise können die Kühlrohre andere Durchmesser haben und/oder andere Rohrabstände haben oder das Rohrbündel kann auch im Innenraum berohrt sein und in seiner Gesamtheit von einem Ende zum anderen Ende quer ein- oder mehrfach durchströmt werden. Dies würde beispielsweise höhere Strömungsgeschwindigkeiten des Wärmeträgers ermöglichen und den Wärmeübergang noch weiter verbessern. Bei einer solchen Ausführung würden der Verteilerkanal bzw. der Sammelkanal nicht als Ringkanal, sondern als Verteilerkästen ausgebildet, die nur einen Teil des Nachkühlerumfangs abdecken.

Selbstverständlich können an den Reaktorhauptteil A auch andere Funktionseinheiten angeschlossen werden, wie Nachreaktoren oder auch Funktionseinheiten, die dem Reaktorhauptteil vorgeschaltet sind, wie z.B. Vorwärmer. Sind diese Funktionseinheiten ohne Zwischenrohrleitungen mit dem Reaktorhauptteil A verbunden, wobei es unerheblich ist, ob lösbar oder verschweißt, so sind die Bedingungen des erfindungsgemäßen Verfahrens statt für den Reaktorhauptteil A alleine sinngemäß für den gesamten Verbund der Funktionseinheiten anzuwenden.

Vor dem Reaktorhauptteil A ist der Gaseintrittsteil B gelegen. Dieser besteht in diesem Fall, wo das Reaktionsgas von oben nach unten geführt wird, aus einer oberen Reaktorhaube mit einem Gaseintrittsstutzen. Die obere Reaktorhaube ist lösbar oder verschweißt mit dem Reaktorhauptteil A verbunden. Entsprechend ist ebenfalls lösbar oder verschweißt ein Gasaustrittsteil C, bestehend aus einer unteren Reaktorhaube mit einem Gasaustrittsstutzen, an den Reaktorhauptteil A angeschlossen.

Die Art solcher Reaktoren ist dabei nicht besonders eingeschränkt, um größtmögliche Freiheit bei der Einstellung eines gewünschten Temperaturprofils oder bei der konstruktiven Gestaltung zu erhalten. Im einfachsten Fall verfügt jede Zone über eine eigene Umwälzeinrichtung, über einen eigenen Kühler und über einen eigenen Aufheizer. Mit dieser Anordnung hat man die größtmögliche Freiheit, in jeder Zone bestimmte Temperaturen einzustellen. Diese Möglichkeit ist jedoch recht aufwändig und kostenintensiv.

Bei einem Mehrzonenreaktor in diesem Zusammenhang muss nicht jeder Mantelraum eine Reaktionszone sein. Vielmehr kann eine Zone auch nur der Temperaturänderung des Reaktionsgases dienen in der Ausgestaltung als Vorwärmer oder Kühler, oder eine Zone wird überhaupt nicht gekühlt und dient als adiabate Reaktionsstufe.

Bezüglich der Ausführung eines jeden zum Betrieb eines solchen Mehrzonenreaktors notwendigen Peripherieaggregats gelten die Beschreibungen, die schon beim einzonigen Reaktorsystem gemacht wurden. Sie können dabei nach konstruktiven, prozesstechnischen oder wirtschaftlichen Aspekten unterschiedlich angeordnet werden. So kann z.B. ein Aufheizer, ein Kühler oder eine Umwälzeinrichtung oder eine Kombination davon bei einer oder mehreren Zonen entfallen. Auf der anderen Seite können z.B. zwei oder mehr Aufheizer, Kühler oder Umwälzeinrichtungen oder Kombinationen daraus an einer Zone angeordnet sein. In beiden Fällen sind dem System angepasste Verbindungsleitungen vorzusehen mit entsprechenden Absperr- und Regelarmaturen.

Der dabei von einer Zone in die andere Zone geförderte Wärmeträger muss über eine weitere Verbindung wieder zurückgeführt werden. Diese Verbindung kann über einen gemeinsamen Kühler hergestellt werden oder durch eine zweite verschließbare Leitung oder über eine so genannte Ausgleichsleitung zwischen den Ausdehnungsgefäßen beider Zonen.

Eine verschließbare Verbindungsleitung zwischen zwei Zonen, die vorteilhaft an Stellen mit einer möglichst großen Druckdifferenz angeordnet wird, erlaubt es, beim Aufheizen oder Abkühlen mit Wärmeträgerumlauf aber auch bei besonderen Prozessbedingungen auf einfache Weise große Wärmemengen zwischen den Zonen auszutauschen.

In jedem Fall ist dafür Sorge zu tragen, dass beim Einfüllen des flüssigen Salzes dieses von Zone zu Zone von unten nach oben steigen kann und die Verbindungsleitungen zwischen den Zonen vor allem für den normalen Reaktionsbetrieb absperrbar sind.

Bei endothermen Reaktionen wird das erfindungsgemäße Verfahren in Einzonenreaktoren oder Mehrzonenreaktoren entsprechend durchgeführt. Die zuzuführende Reaktionswärme wird entweder gesondert erzeugt, z.B. mit einem entsprechend dimensionierten Aufheizer, oder es wird die Prozesswärme aus anderen Anlagenteilen genutzt. Für die Ausführung der einzelnen Komponenten des Reaktorsystems gelten die vorgenannten Ausführungen. Ein Kühler ist im stationären Normalbetrieb eigentlich nicht notwendig, jedoch ist er hilfreich, wenn ein niedrigeres Temperaturniveau eingestellt werden soll und wenn der Reaktor abgefahren soll, damit die Abkühlzeit in einem akzeptablen Rahmen bleibt. Dies steht im Ermessen des Betreibers.

Das Abkühlen erfolgt mit den gleichen Schritten wie beim exothermen Prozess, sofern die entsprechenden Anlagenteile vorhanden sind.

Die Temperaturänderungen des erfindungsgemäßen Verfahrens betreffen im Einzelnen das Aufheizen beim Anfahren und das Abkühlen beim Abfahren eines Rohrbündelreaktors. Diese instationären Vorgänge können nicht isoliert betrachtet werden. Vielmehr sind sie im Gesamtzusammenhang mit der Inbetriebnahme bzw. Außerbetriebnahme zu sehen. Innerhalb dieser Vorgänge sind eine Vielzahl von Einzelmaßnahmen zu beachten. Nachfolgend werden zunächst die Vorgänge beim Anfahren des Reaktionssystems mit dem erfindungsgemäßen Verfahren beschrieben.

Es wird vorgeschlagen, innerhalb des Erst-Inbetriebnahmeprozesses das Anfahren und Abfahren des Reaktors vor der eigentlichen Inbetriebnahme wenigstens einmal durchzuführen, was auch als "Heißtest" bezeichnet wird. Dieser unterscheidet sich vom betriebsmäßigen Anfahren dadurch, dass er mit Erhöhung der Wärmeträgertemperatur bis dicht unter die Auslegungstemperatur durchgeführt wird. Er ist ein erster Belastungstest zur Überprüfung des gesamten Systems. Insbesondere wird die Festigkeit und Dichtigkeit der Rohreinschweißungen überprüft, um sicher zu gehen, dass der Reaktor frei von Salzlecks ist.

Weiterhin macht sich dabei die Bedienungsmannschaft mit der Handhabung des Reaktorsystems vertraut. Oftmals wird aus Sicherheitsgründen dieser Heißtest ohne Katalysatorfüllung der Reaktionsrohre und ohne Zuführung von Reaktionsgas durchgeführt, damit eventuell doch austretendes Salz keine unnötigen Schäden verursachen kann. Eine Entscheidung darüber muss in Absprache mit dem Katalysatorhersteller bzw. mit dem Lizenzgeber für das Verfahren getroffen werden. Unabhängig davon können für diesen Betriebsfall auch einfachere Ersatzdichtungen verwendet werden.

Der Heißtest umfasst folgende Schritte, die weiter unten näher erläutert werden:
1 Prozeduren vor der Erstinbetriebnahme
2 Vorwärmen des Reaktorsystems auf Salzeinfülltemperatur
3 Befüllen des Reaktorsystems mit Salz
4 Aufheizen des Reaktorsystems auf Prüftemperatur
5 Durchführung Heißtest
6 Abkühlen von Heißtesttemperatur auf Salzentleerungstemperatur
7 Entleeren des Salzes in den Salztank
8 Abkühlen des Reaktorsystems auf Umgebungstemperatur

Nach dem Heißtest werden die Reaktionsrohre gegebenenfalls mit Katalysator gefüllt, das Reaktorsystem wird wiederum mit dem erfindungsgemäßen Verfahren angefahren. Nach der Produktionszeit wird das Reaktorsystem wiederum mit dem erfindungsgemäßen Verfahren abgefahren.

Das An- und Abfahren im Normalbetrieb umfasst für den Fall, dass sich das Salz vor dem Start ausschließlich im Salzbehälter (und nicht im Reaktor) befindet, folgende Schritte, die ebenfalls weiter unten näher erläutert werden:
9 Aufheizen des Reaktorsystems auf Betriebstemperatur
10 Anfahren und Durchführung des Prozesses
11 Abfahren der Reaktion und Warmhalten des Reaktors
12 Abfahren des Reaktors

Für den Fall, dass sich Salz vor dem Start in dem Reaktor befindet, sind demgegenüber einige Unterschiede zu beachten, die weiter unten erläutert werden.

Die einzelnen Verfahrensschritte werden im Folgenden näher beschrieben. Dabei baut ein Schritt auf dem anderen auf.

### Heißtest

Vor dem ersten Anfahren des Reaktorsystems wird ein "Heißtest" durchgeführt, um die einwandfreie Dichtheit der Reaktorsalzseite zu prüfen, insbesondere die Rohreinschweißungen, um sicherzugehen, dass der Reaktor nach dem Abkühlen frei von Salzlecks ist, und damit sich die Bedienungsmannschaft mit der Handhabung des Reaktorsystems vertraut machen kann.

### 1 Prozeduren vor der Erstinbetriebnahme

### Spülen des gesamten Salzraums

Da während des Transports und der Montage, speziell in feuchten Jahreszeiten, die Bildung von Kondenswasser nicht vollständig vermeidbar ist, muss die Mantelseite gespült werden. Wurde die Dichtheit der Mantelseite durch Wasserdruckprobe nach vollständiger Montage mit Industriewasser geprüft, statt einen Luftdrucktest durchzuführen, kann dasselbe Wasser auch zum Spülen verwendet werden. Es wird empfohlen, 0,5 % Gewichtsprozent Na3PO4 beizusetzen. Um auf der Rohrseite die Kondensation von Wasserdampf und somit Korrosion zu vermeiden, sollte die Wassertemperatur über dem Taupunkt der Luft gehalten werden. Die Wassertemperatur kann durch Einblasen von Heißluft in die Reaktionsrohre oder durch Einschalten der E-Aufheizer langsam auf 60-80°C erhöht werden. Die Pumpen müssen etwa zwölf Stunden laufen. Danach ist die Mantelseite zu entleeren und ein weiteres Mal etwa zwei Stunden lang mit entmineralisiertem Wasser zu spülen. Es wird empfohlen, ein weiteres Mal zu entleeren und zu spülen. Während jedes Spülvorgangs ist darauf zu achten, dass die Mantelseite genug Wasser enthält (mindestens bis zum "Minimumniveau" in den Pumpengehäusen). Nach dem Ablassen des Wassers ist die Mantelseite mit Heißluft zu trocknen und anschließend mit Inertgas zu spülen.

### Reinigen/ Entrosten der Rohrseite

Wurden die Rohre sauber angeliefert, ist keine spezielle Reinigung erforderlich.

### Salzschmelzen im Salztank

Zur Vermeidung von Schäden im Reaktor ist sicherzustellen, dass das verwendete Salz den Mindestanforderungen der Herstellerspezifikation entspricht.

### 2 Vorwärmen des Reaktorsystems auf Salzeinfülltemperatur

### Vorbereitung

- Reaktorsystem vollständig zusammengebaut, beim Heißtest können auch geeignete Ersatzdichtungen verwendet werden.
- Notwendige Rohrleitungen an der oberen und unterem Reaktorhaube angeschlossen, restliche Öffnungen verschlossen.
- Funktionen der Einzelkomponenten vorab überprüft.
- Mantelseitige Dichtheitsprobe durchgeführt.
- Luftgebläse betriebsbereit.
- Luftvorwärmer betriebsbereit.
- Versorgungseinrichtungen zur Temperierung betriebsbereit.
- Gas- und salzseitige Instrumentierung eingebaut und betriebsbereit.
- Niveaumessstutzen und sonstige nicht mit Rohrleitungen verbundene Stutzen der Salzseite abgedichtet, um das Herausspritzen von Salz beim Einfüllen zu vermeiden.
- Temperiergasaustritt aus dem Reaktor an eine sichere Stelle.
- Reaktionsrohre mit Katalysator und/oder Inertmaterial gefüllt; mit dem Katalysatorhersteller und Prozesslizenzgeber ist abzuklären, ob sich der Katalysator auch schon während des Heißtests in den Reaktionsrohren befinden darf oder ob die Reaktionsrohre zum Schutz des Katalysators leer bleiben sollen.
- Salztank mit Salz gefüllt, dessen Qualität mindestens der Herstellerspezifikation entspricht zur Vermeidung von Schäden am Reaktor.
- Mit Salz gefüllter Salztank auf Betriebstemperatur (ca. 200 °C) vorgewärmt.
- Kein Wärmeträgersalz im Reaktorsystem.
- Kühler montiert und betriebsbereit.
- Regelventil für Wärmeträger kalibriert und betriebsbereit.
- Umwälzpumpe einschließlich Antriebsmotore eingebaut, jedoch nicht in Betrieb.
- Aufheizer für Wärmeträger betriebsbereit, jedoch nicht in Betrieb.
- Alle Salzrohrleitungen (Füllen/Entleeren, Überlauf, Entlüftung) montiert und betriebsbereit angeschlossen.
- Alle Thermoelemente, insbesondere diejenigen im oberen und unteren Verteilerkanal für den Wärmeträger sowie in der oberen und unteren Haube betriebsbereit.
- Alle Dampfbegleitheizungen für Apparate und Rohrleitungen angeschlossen und betriebsbereit.
- Reaktor und Wärmeträger führende Rohrleitungen vollständig isoliert.
- Absperrventile auf Salzseite in Salzeinfüll- und Entleerungsleitungen geschlossen.
- Absperrventile Anfahrdampf der Begleitheizungen geschlossen.

### Durchführung

Ist der verwendete Wärmeträger ein flüssiges Salz oder eine flüssige Salzmischung, so muss der Reaktor vor Einfüllen der flüssigen Salzschmelze auf eine Temperatur vorgewärmt werden, die deutlich über der Schmelztemperatur des Salzes liegt, damit dieses nicht gleich wieder erstarrt. Hierfür wird heißes Temperiergas durch den Reaktor geleitet.

Die Art des Temperiergases ist dabei nicht besonders eingeschränkt, solange es einen eventuell in den Reaktionsrohren befindlichen Katalysator nicht schädigt. In Frage kommt insbesondere Dampf, Inertgas, Luft, Rauchgas oder wenigstens teilweise im Kreis geführtes nicht, teilweise oder ganz reagiertes Reaktionsgas. Bevorzugt wird als Temperiergas jedoch erhitzte Luft verwendet, da dieses Gas leicht verfügbar ist und nach einer eventuellen Filterung sauber und unproblematisch ist. Gegebenenfalls kann es auch im Kreis gefahren werden. Das heiße Temperiergas wird z.B. dadurch erzeugt, dass Luft mit einem Gasgebläse und Gasvorwärmer erzeugt und in den Reaktor geleitet wird.

Es ist hierbei möglich, das Temperiergas entweder durch die Reaktionsrohre oder durch den Mantelraum des Reaktors zu führen. Wird das Temperiergas durch den Mantelraum des Reaktors geführt, so hat dies den Vorteil, dass der gesamte Mantelraum vom Temperiergas durchströmt wird. Dieser Mantelraum hat ein größeres Volumen und eine größere Wärmeübertragungsfläche als die Reaktionsrohre. Nachteilig ist jedoch, dass das Wärmeträgermedium ein Gas ist und als solches andere Fließeigenschaften besitzt als ein flüssiger Wärmeträger wie flüssiges Salz. Das Temperiergas sucht sich Strömungswege mit dem geringsten Strömungswiderstand und umgeht im Bypass Teile des Reaktors. Damit ist es oft schwierig, eine gleichmäßige Vorwärmung zu erreichen. Zudem müssten Öffnungen im Mantelraum geschaffen werden, die im Anschluss an das Aufheizen wieder geschlossen werden müssten. Wegen der Gefährlichkeit des flüssigen Salzes ist man jedoch grundsätzlich bestrebt, den Salzraum ohne Dichtungen als Schweißkonstruktion auszuführen.

Diese undefinierte und ungleichmäßige Erwärmung bei der Durchströmung des Mantelraums wird vermieden, wenn das Temperiergas durch die Reaktionsrohre des Rohrbündels geführt wird. Die Rohre werden dadurch kontinuierlich vom Eintritt bis zum Ende erwärmt. Die erwärmten Rohre heizen das sie umgebende Gas im Mantelraum auf. Das erhitzte Gas hat nun eine geringere Dichte, steigt nach oben. Durch diese als natürliche Konvektion bekannte Erscheinung wird das Gas im Mantelraum umgewälzt und überträgt die Wärme an andere Stellen.

Die Stellen des Reaktors, die am spätesten erwärmt werden, sind naturgemäß exponierte Stellen wie die Verteilerkanäle für den Wärmeträger. Bei Rohrbündelreaktoren, bei denen der Wärmeträger über den Umfang dem Mantelraum des Reaktors zugeführt wird, sind die Verteilerkanäle als Ringkanäle ausgeführt. Diese verteilen den Wärmeträger auf den Umfang des Reaktors, von wo er durch entsprechend dimensionierte Durchtrittsöffnungen im Mantel gleichmäßig in den Mantelraum des Reaktors eintritt. Diese Verteilerkanäle erfahren eine Temperaturänderung in erster Linie durch Wärmeleitung, ausgehend vom Reaktormantel, welcher seinerseits wie beschrieben durch die natürliche Konvektion des im Mantelraum befindlichen Gases als auch durch Wärmestrahlung erwärmt wird. Durch die ungleichmäßige Erwärmung der Ringkanäle entsteht auch innerhalb dieser eine natürliche Konvektion des in ihnen enthaltenen Gases, wodurch wiederum der Temperaturausgleich begünstigt wird.

Obgleich, wie ausgeführt, eine Erwärmung des Reaktors mit Durchleiten von Temperiergas durch die Mantelseite des Reaktors in Einzelfällen möglich und sinnvoll ist, wird im Allgemeinen das Durchleiten des Temperiergases durch die Reaktionsrohre bevorzugt. Dies bietet weiterhin den Vorteil, das Temperiergas auch als Kühlgas beim Abfahren des Reaktors zu benutzten, was im anderen Fall nicht möglich wäre, wo der Mantelraum ja noch vollständig mit Wärmeträger gefüllt ist.

Die Strömungsrichtung des Temperiergases ist nicht besonders beschränkt. So kann es von oben nach unten oder von unten nach oben durch die Rohre des Rohrbündelreaktors geführt werden. Möchte man jedoch auch die Möglichkeit haben, nach dem Abfahren des Reaktors das Salz im Reaktor zu belassen und dort erstarren zu lassen, so ist es beim Wiederanfahren des Reaktors mit Aufschmelzen des im Mantelraum befindlichen festen Salzes unabdingbar, dass das Temperiergas von oben nach unten durch die Rohre des Reaktors geführt wird, damit sich das aufgeschmolzene Salz ungehindert nach oben ausdehnen kann. Würde das Temperiergas von unten in die Reaktionsrohre eingeleitet werden, so könnte sich das zuerst unten aufschmelzende Salz nirgends ausdehnen und würde Schäden am Reaktor verursachen.

So wird in einer bevorzugten Ausführungsform der Erfindung das Temperiergas grundsätzlich in die obere Reaktorhaube geführt, wo es sich auf das Reaktionsrohrbündel verteilt, die Reaktionsrohre durchströmt, in die untere Reaktorhaube gelangt und aus dieser durch einen Gasaustrittsstutzen herausströmt.

Im Normalbetrieb gibt es Temperaturunterschiede innerhalb des Reaktors. Die obere Reaktorhaube als oberer Teil des Reaktors hat dort nahezu die Temperatur des in sie eintretenden Reaktionsgasgemisches. Der Reaktorhauptteil, welcher im wesentlichen aus dem Reaktormantel, dem Rohrbündel, den Rohrböden und den daran angeschlossenen Verteilerkanälen gebildet ist, hat in der Regel eine wesentlich höhere Temperatur. Insgesamt jedoch werden die Temperaturunterschiede innerhalb des Reaktorhauptteils durch den durch ihn strömenden Wärmeträger auf einen kleinen Betrag begrenzt. Die Gründe für den raschen Temperaturausgleich sind erstens die große Wärmekapazität des Wärmeträgers und zweitens der gute Wärmeübergang zwischen Wärmeträger und Reaktor durch eine ausreichend bemessene Strömungsgeschwindigkeit. Die unterschiedlichen Ausdehnungen in Folge unterschiedlicher Temperaturen zwischen oberer Reaktorhaube und Reaktorhauptteil sind unkritisch, da diese konstruktiv durch verschiedene Maßnahmen abgefangen werden, wie z.B. durch Trennung mit Flanschen oder durch elastische Verformung der oberen Haube.

Gerade auch beim Anfahrvorgang gibt es innerhalb des Reaktors Temperaturunterschiede, die jedoch nur langsam ausgeglichen werden können, da entweder der Wärmeträger noch nicht eingefüllt ist oder er, wenn er im Mantelraum vorhanden ist, dann seinerseits eine gewisse Zeit benötigt, bis er aufgeschmolzen ist und einen Beitrag zum Temperaturausgleich leisten kann.

Aus wirtschaftlichen Gründen ist man im Allgemeinen bestrebt, den Reaktor so schnell wie möglich anzufahren und auf Heißtest- bzw. Betriebstemperatur zu bringen. Wird in den Reaktor, der noch Umgebungstemperatur hat, heißes Temperiergas eingeführt, so führt dies zu Temperaturunterschieden innerhalb des Reaktorhauptteils, da die Reaktorteile, die zuerst mit dem Gas in Kontakt kommen, stärker erwärmt werden als solche am Reaktoraustritt, wo das Temperiergas bereits einen Großteil seiner Wärme abgegeben hat. Solche Temperaturunterschiede führen im Reaktor zu einer unterschiedlichen Ausdehnung des Materials und in der Folge zu Wärmespannungen. Dabei sind wegen entsprechend konstruktiver Maßnahmen die Temperaturunterschiede zwischen den Hauptkomponenten Reaktorhauptteil A, Gaseintrittsbereich B und Gasaustrittsbereich C im Allgemeinen unbedenklich.

Am kritischsten ist der Zeitabschnitt während des Aufheizvorgangs, bei dem noch kein Wärmeträger umgewälzt wird und heißes Temperiergas in den Reaktorhauptteil A geleitet wird. Dabei ist die Temperaturdifferenz am Reaktorhauptteil zwischen Rohrbodenoberkante auf der Gaseintrittseite und dem äußeren Ende des am anderen Ende des Reaktors gelegenen Ringkanals am größten.

In überraschender Weise wurde gefunden, dass das Aufheizen dann besonders gleichmäßig geschieht und die Gefahr von unzulässigen Wärmespannungen dann nahezu ausgeschlossen werden kann, wenn erfindungsgemäß die Temperatur des Temperiergases bei dessen Eintritt in die Reaktionsrohre beim Anfahren nach oben und/oder der Volumenstrom des Temperiergases nach oben so begrenzt werden, dass über jeden Zeitraum, der mit dem ersten Einleiten des Temperiergases beginnt, die zeitlich gemittelte Änderungsgeschwindigkeit der Temperatur des Temperiergases bei dessen Austritt aus den Reaktionsrohren höchstens 30°C/h beträgt.

In einer bevorzugten Ausführungsform der Erfindung beträgt die zeitlich gemittelte Änderungsgeschwindigkeit der Temperatur des Temperiergases bei dessen Austritt aus den Reaktionsrohren höchstens 20°C/h, besonders bevorzugt höchstens 10°C/h.

Dabei werden charakteristische Temperaturen an Temperaturmessstellen gemessen, die mindestens im Gaseintrittsbereich, mit dem Gaseintrittsstutzen und der Gaseintrittshaube, im Gasaustrittsbereich, mit dem Gasaustrittsstutzen und der Gasaustrittshaube, und im Verteilerkanal am Gaseintrittsende entgegengesetzten Ende gelegen sind.

Vorteilhaft ist es, wenn der Unterschied zwischen der Temperatur des Temperiergases bei dessen Eintritt in die Reaktionsrohre und der Temperatur des eintrittsseitigen Rohrbodens zu jedem Zeitpunkt kleiner als 150°C, bevorzugt kleiner als 100°C und besonders bevorzugt kleiner als 70°C ist.

Es können weitere Temperaturen in mindestens einem innerhalb des Rohrbündels gelegenen Thermorohr in axialer Richtung gemessen werden.

Die Temperatur des Temperiergases bei dessen Austritt aus den Reaktionsrohren wird vorzugsweise direkt gemessen.

Vorzugsweise wird die Gaseintrittstemperatur erst dann erhöht, wenn die Temperaturen aller Messstellen anzusteigen beginnen.

Bei allen beschriebenen Vorgängen ist es wichtig, dass dabei sehr sorgsam vorgegangen wird und die Temperaturen im Reaktorsystem ständig überwacht werden, um übermäßige Wärmespannungen zu vermeiden. Wenn die maximal vorgegebene, zeitlich gemittelte Änderungsgeschwindigkeit der Temperatur des Temperiergases bei dessen Austritt aus den Reaktionsrohren, wobei diese Änderungsgeschwindigkeit über einen Zeitraum gemittelt wird, der mit dem ersten Einleiten des Temperiergases beginnt, überschritten wird, so ist diese Änderungsgeschwindigkeit durch Verringerung der Gasdurchsatzmenge und/oder der Gastemperatur zu reduzieren.

Mit dem Umwälzen des Wärmeträgers sollte erst dann begonnen werde, wenn die niedrigste Temperatur am Reaktorhauptteil mindestens über der Schmelztemperatur des Wärmeträgers liegt und die Durchschnittstemperatur des Reaktorhauptteils mindestens 20°C, bevorzugt mindestens 40°C und besonders bevorzugt mindestens 65°C über der Schmelztemperatur des Wärmeträgers liegt.

### Begleitheizung

In einer weiteren bevorzugten Ausgestaltung der Erfindung werden sämtliche an den Rohrbündelreaktor angeschlossene Aggregate wie Umwälzpumpe, Wärmetauscher und E-Aufheizer sowie alle Wärmeträger führenden oder an die Wärmeträgerseite angeschlossenen Leitungen wie Verbindungsleitungen, Füll- und Entleerungsrohrleitungen, Entgasungsleitungen sowie Überlaufleitungen mit isolierten Begleitheizungen beheizt, sofern keine alternative Beheizungsmöglichkeit vorliegt. Dabei sollte die Temperatur der Begleitheizung mindestens 160°C, bevorzugt mindestens 180°C und ganz bevorzugt mindestens 220°C, aber höchstens 250°C betragen.

Vorzugsweise wird die Begleitheizung mit Sattdampf betrieben. An Stelle einer Dampfbeheizung können gleichfalls andere Heizsysteme zur Ausführung kommen, wie z.B. elektrische Begleitheizungen. Hier sind die Bestimmungen zum Explosionsschutz zu beachten.

### Salzbadkühler

Wird als Salzbadkühler ein Sattdampferzeuger verwendet, so wird dieser zeitgleich zu den Begleitheizungen durch Einleiten von Dampf in den Sattdampferzeuger hinein mit einem Druck zwischen 15 und 25 bara erhitzt. Das erzeugte Kondensat wird über einen Bodenstutzen abgezogen.

### Peripherieaggregate

In vorteilhafter Ausgestaltung der Erfindung werden die an den Reaktorhauptteil fest angeschlossenen Peripherieaggregate wie Pumpengehäuse, Aufheizergehäuse und Wärmetauscher beheizt, sobald der Rohrbündelreaktor eine Durchschnittstemperatur zwischen Eintritt und Austritt bzw.zwischen ein- und austrittsseitigem Rohrboden hat, die zwischen 65°C und 95°C, bevorzugt zwischen 70°C und 90°C und besonders bevorzugt zwischen 75°C und 85°C liegt. Für die mittlere Aufheizgeschwindigkeit der Peripherieaggregate sind vorbehaltlich der Festigkeitsberechnung auf äußere Kräfte und Wärmespannungen Aufheizgeschwindigkeiten bis zu 50°C/h zulässig.

### 3 Befüllen des Reaktorsystems mit Salz

Sobald erfindungsgemäß erstens das Salz im Salztank eine Mindesttemperatur von 200°C erreicht hat, zweitens die Temperatur am unteren Ringkanal des Reaktors durch das Aufheizen mit dem Temperiergas eine Temperatur von mindestens 180°C erreicht hat, und drittens auch alle Peripherieaggregate, im Besonderen Umwälzeinrichtung, Kühler, Aufheizer, sowie alle Rohrleitungen zum Füllen und Entleeren mit der Begleitheizung auf mindestens 180°C erhitzt wurden, beginnt die Salztankpumpe mit der Förderung des flüssigen Salzes in das Reaktorsystem, die Ventile an den Füll/Entleerungsrohrleitungen zum Reaktor werden geöffnet. Durch eine Vielzahl von beheizten und isolierten Füll-/Entleerungsleitungen wird das flüssige Salz an mehreren Stellen des Reaktorsystems zugegeben. Die Füll-/Entleerungsleitungen sind bevorzugt in der Nähe der Tiefpunkte des Reaktor-Mantelraums, der Umwälzpumpe, des Salzbadkühler und des E-Aufheizers angeschlossen. Der Anschluss ist auch an die Verbindungsleitungen möglich, die zu diesen Tiefpunkten hinführen. Der Fördergang wird so lange fortgesetzt, bis der Mindest-Salz-füllstand ("low salt level") erreicht ist. Während dieses gesamten Vorgangs bleiben die Zufuhr von heißem Temperiergas durch den Reaktor sowie die Begleitheizungen für Wärmeträger führende Rohrleitungen in Betrieb. Meldet die Niveauüberwachung das Erreichen des Mindestfüllstandes, so werden die Füllventile geschlossen, und die Salztankpumpe wird ausgeschaltet. Alternativ ist auch das Befüllen ohne Tankpumpe über einen Gasüberdruck im Salztank möglich.

Während die Temperatur des Salzes im Salztank zu Beginn des Fördervorgangs auf ca. 200°C festgelegt ist, ist die Temperatur des Salzes am Eintritt in den Reaktor von der Temperatur der Begleitheizung der Füllleitungen und den Wärmeverlusten im Verlauf der Füllleitung abhängig. Der Temperaturbereich kann daher zwischen 180°C und 200°C angegeben werden.

Nach dem Einfüllen des Salzes werden sämtliche über dem Salz befindliche Gasräume mit Stickstoff überlagert.

Während des Salzeinfüllens steht der Sattdampferzeuger vorzugsweise unter Druck und ist nicht geflutet, d.h. es ist kein Kesselspeisewasser im Kühler.

### 4 Aufheizen des Reaktorsystems auf Prüftemperatur

Nachdem der Reaktor bis zum Mindest-Salzfüllstand mit flüssigem Salz gefüllt ist, alle Stellen des Reaktors eine Mindesttemperatur von 180°C haben, die Füllleitungen abgesperrt sind und die Salztankpumpe außer Betrieb genommen ist, werden die Salzumwälzpumpe und der Aufheizer eingeschaltet. Das Reaktorsystem wird auf Solltemperatur hochgeheizt. Beim Heißtest ist die Solltemperatur eine Prüftemperatur, die etwas unter der Auslegungstemperatur des Reaktors liegt. Sie liegt oftmals im Bereich zwischen 370°C bis 400°C, kann im Einzelfall jedoch auch bis zu 450°C betragen.

Die Heizelemente des E-Aufheizers sind in der Regel in mehrere Heizgruppen aufgeteilt, um die Heizleistung stufenweise zu steigern oder sie sind mit Leistungsteilern für die stufenlose Einstellung der Heizleistung ausgestattet.

Da der E-Aufheizer das Salz sehr viel effektiver aufheizen kann, wird das Temperiergas durch Abschalten von Luftgebläse und Luftvorwärmer außer Betrieb genommen. Das Absperrventil der Temperiergasleitung wird geschlossen. Die Stutzen und Rohrleitungen des Salzüberlaufs, insbesondere die Notentleerungsleitung, die Entlüftung sowie die Salzeintrittsleitung des E-Aufheizers werden weiterhin beheizt. Die übrigen Begleitheizungen der Peripherieaggregate werden ebenso wie das Temperiergas außer Betrieb genommen.

Mit steigender Temperatur nimmt das Salzvolumen zu. Überschüssiges Salz fließt über die Überlaufleitung vom Ausdehnungsgefäß zum Salztank ab. Sobald der Aufheizvorgang abgeschlossen ist, wird der Salztank während des normalen Produktionsbetriebs nicht mehr benötigt. In der Regel wird er trotzdem weiter beheizt, damit überlaufendes Salz nicht gleich erstarrt, wenn es in den Salztank gelangt. Überdies kann das Salz im Salztank Schäden verursachen, wenn es dort erstarrt, da es Feuchtigkeit aufnehmen kann. Dies ist bei der Konstruktion des Salztanks zu berücksichtigen. Alternativ kann ein kleinerer, ständig beheizter Salztank zwischengeschaltet werden, der in der Lage ist, zu erwartende Schwankungen im Salzstand problemlos aufzunehmen.

### Sattdampferzeuger

Sobald das Salz eine Temperatur von ca. 220°C erreicht hat, wird der Sattdampferzeuger mit Speisewasser gefüllt. Das Regelventil für die Salzzufuhr wird zunächst auf etwa 2-3% gestellt. Sobald der Kühler seine Betriebstemperatur erreicht hat, wird das Regelventil auf minimalen Durchfluss gestellt. Dadurch ist einerseits sichergestellt, dass das Speisewasser erhitzt wird, andererseits aber auch keine Verdampfung einsetzt, die dem Salz Wärme entziehen würde. Nach Erreichen des betriebsmäßigen Sattdampfdrucks kann das Regelventil ganz geschlossen werden.

### 5 Durchführung Heißtest

Nach Erreichen der Solltemperatur für den Heißtest wird die E-Aufheizerleistung durch Abschalten von Heizgruppen reduziert, um nur noch die Wärmeverluste während der Haltezeit zu kompensieren.

Die Solltemperatur sollte mindestens 4 Stunden gehalten werden. Während dieser Haltezeit wird über die E-Aufheizerleistung die Solltemperatur geregelt und das Reaktorsystem auf Funktion und Dichtigkeit überprüft.

### 6 Abkühlen von Heißtesttemperatur auf Salzentleerungstemperatur

Zum Ende der Haltephase ist die Salzumwälzpumpe in Betrieb, der Aufheizer gleicht lediglich die Wärmeverluste aus, nur Salzüberlauf- und Entlüftungsleitungen sind dampfbeheizt, die Absperrventile der Füllleitungen sind geschlossen.

Das Abkühlen wird durch Außerbetriebnahme des Aufheizers und Inbetriebnahme des Salzkühlers eingeleitet. Ist dieser als Sattdampferzeuger ausgeführt, so wird ein vor ihm liegendes Regelventil langsam geöffnet und das Salz fließt zum Mantelraum des Sattdampferzeugers. Das in den dortigen Rohren befindliche Wasser verdampft teilweise, das entstandene Wasser-Dampf-Gemisch steigt auf und wird in einem Dampfabscheider getrennt. Der Dampf wird in das Dampfsystem geleitet, das Wasser wird zum Dampferzeuger wieder zurückgeführt. Um ein Trockenlaufen und ein Überhitzen zu verhindern, muss als Ersatz für das verdampfte Wasser eine entsprechende Menge Kesselspeisewasser ergänzt werden.

Während des Abkühlvorganges verringert sich das Salzvolumen. Der Salzstand wird ständig durch eine Füllstandsmessung überwacht. Noch vor Erreichen des Minimumstandes geht die Salztankpumpe in Betrieb und ersetzt das verringerte bzw. fehlende Salzvolumen durch Zuführen von flüssigem Salz aus dem Salztank. Dabei werden entsprechende Ventile in den Füllleitungen geöffnet. Die Abkühlung wird fortgesetzt, bis das Salz eine Salzentleerungstemperatur von ca. 220°C erreicht hat. Die Abkühlgeschwindigkeiten sind während der Abkühlung mit Salzumwälzung nicht beschränkt.

### 7 Entleeren des Salzes in den Salztank

Am Ende des Abkühlvorgangs bis auf Salzentleerungstemperatur von bevorzugt ca. 220°C sind gegebenenfalls das Luftgebläse und der Luftvorwärmer weiterhin außer Betrieb. Die Salzumwälzpumpe und der Salzbadkühler arbeiten noch.

Die Salzentleerung ist grundsätzlich bei jeder für den Reaktor zulässigen Temperatur möglich. Der Salztank muss jedoch entsprechend ausgelegt sein.

Das Abkühlen mit dem Salzbadkühler und laufender Salzumwälzung ist die schnellste und sanfteste Methode für das Reaktorsystem, da der Wärmeübergang mit umgewälztem Salz am besten ist, sowohl vom Reaktor auf das Salz als auch vom Salz an den Salzbadkühler.

Vor Beginn der Entleerung muss unbedingt überprüft werden, ob die Begleitheizungen von Entleerungs- und Entlüftungsleitungen sowie vom Salztank in Betrieb sind, um den freien Abfluss sicherzustellen.

Die Entleerung wird mit dem Abschalten der Salzumwälzpumpe eingeleitet. Unmittelbar danach erfolgt die Entleerung mit Öffnen der Salzentleerungsventile des Reaktorsystems. Die Beheizung des Salztanks ist in Betrieb. Dadurch wird ein Festwerden des Salzes im Reaktor zu vermieden.

### 8 Abkühlen des Reaktorsystems auf Umgebungstemperatur

Das Abkühlen des Reaktorsystems auf Umgebungstemperatur kann durch natürliche Abstrahlung oder durch Einblasen von Temperiergas in die Reaktorrohre erfolgen. Die Art des Kühlgases wird vom Katalysatorhersteller oder vom Lizenzgeber des Verfahrens festgelegt.

Zu Beginn des Abkühlens auf Umgebungstemperatur ist das Salz vollständig aus dem Reaktor entleert, und die am Reaktor befindlichen Aggregate sind außer Betrieb genommen. Insbesondere wird der Dampferzeuger auf Umgebungsdruck entspannt. Er wird durch Verdampfung des in ihm befindlichen Wassers auf ca. 100°C abgekühlt, anschließend wird das Wasser abgelassen bzw. ausgeblasen.

Nun beginnt das eigentliche Kühlen durch Kühlung mit Kühlgas. Dabei sind die Bedingungen des erfindungsgemäßen Verfahrens einzuhalten, damit das Abkühlen gleichmäßig geschieht und die Gefahr von unzulässigen Wärmespannungen ausgeschlossen werden können. Entsprechend ist darauf zu achten, dass die Temperatur des Temperiergases bei dessen Eintritt in die Reaktionsrohre beim Abfahren nach unten und/oder der Volumenstrom des Temperiergases nach oben so begrenzt werden, dass über jeden Zeitraum, der mit dem ersten Einleiten des Temperiergases beginnt, die zeitlich gemittelte Änderungsgeschwindigkeit der Temperatur des Temperiergases bei dessen Austritt aus den Reaktionsrohren 30°C/h nicht überschreitet.

Dazu muss gegebenenfalls das Kühlgas mit dem Lufterhitzer entsprechend erwärmt werden.

Vorzugsweise wird die Gastemperatur erst dann durch Verminderung der Heizleistung des Lufterhitzers erniedrigt, wenn die Temperaturen aller Messstellen zu sinken beginnen. Die Abkühlgeschwindigkeit sollte höchstens 30°C/h, bevorzugt höchstens 20°C/h und ganz bevorzugt höchstens 10°C/h betragen.

Bei allen beschriebenen Vorgängen ist es wichtig, dass dabei sehr sorgsam vorgegangen wird und die Temperaturen im Reaktorsystem ständig überwacht werden, um übermäßige Wärmespannungen zu vermeiden. Wenn die maximal zulässige, zeitlich gemittelte Änderungsgeschwindigkeit der Temperatur des Temperiergases bei dessen Austritt aus den Reaktionsrohren, wobei diese Änderungsgeschwindigkeit über einen Zeitraum gemittelt wird, der mit dem ersten Einleiten des Temperiergases beginnt, überschritten wird, so ist die Gastemperatur zu erhöhen und evtl. zusätzlich die Gasdurchsatzmenge zu verringern.

Das Abkühlen des Reaktorsystems mit Kühlgas kann nur solange erfolgen, bis die Temperatur im Reaktorsystem die minimale Gebläseaustrittstemperatur erreicht hat. Danach wird das Gebläse abgeschaltet.

Ein weiteres Abkühlen ist mit natürlicher Wärmeabstrahlung möglich. Zur Beschleunigung können einige Stutzen in beiden Hauben geöffnet werden.

Nachdem das Reaktorsystem annähernd Umgebungstemperatur erreicht hat, werden die Hauben oder die Mannlöcher an den Hauben geöffnet und die Rohreinschweißungen an den Rohrböden auf mögliche Undichtigkeiten überprüft sowie weitere Inspektionen durchgeführt.

### Normalbetrieb, Salz vor Start im Salzbehälter

Die nachfolgenden Verfahrensschritte beziehen sich auf den Anfahr- und Abfahrvorgang eines Rohrbündelreaktors, nachdem zumindest ein Heißtest durchgeführt wurde und Salz als Wärmeträger in den Salztank zurückgeleitet wurde. Alle Komponenten des Reaktors sind hierfür angeschlossen und betriebsbereit.

### 9 Aufheizen des Reaktorsystems auf Betriebstemperatur

Die Verfahrensschritte zum Aufheizen des Reaktors für den Betriebszustand des Normalbetriebs bis auf Solltemperatur sind genau identisch mit denjenigen für den Heißtest, wobei hier die Solltemperatur nicht die Prüftemperatur ist, sondern die normale Betriebstemperatur des Prozesses. Nach Erreichen der Solltemperatur sind gegebenenfalls alle Hauptflanschverbindungsschrauben sowie auch die Stopfbüchsen der Thermoelemente nachzuziehen. Der Reaktor ist nun anfahrbereit.

### 10 Anfahren und Durchführung des Prozesses

Nach Erreichen der Anfahrtemperatur wird der Prozess auf der Grundlage von Betriebserfahrungen sowie in Absprache mit dem Lizenzgeber angefahren.

Zur Abfuhr der Prozesswärme ist ein Salzbadkühler vorgesehen. Je nach Prozess und Randbedingungen können verschiedene Bauarten vorgesehen werden. Ist die Prozesswärme relativ gering, so bieten sich einfache Bauarten an, z.B. in der Ausführung als Luftkühler. Dieser kann beispielsweise für die Feedvorwärmung genutzt werden, oder die abgeführte Wärme wird an die Umgebung abgegeben.

Erzeugt der Reaktor größere Wärmemengen, so werden diese oftmals in Sattdampferzeugern zur Erzeugung von Sattdampf genutzt, der an anderen Stellen der Produktionsanlage sinnvoll genutzt werden kann. Der Salzbadkühler sollte noch vor dem Start der Reaktion auf niedrigem Niveau in Betrieb gesetzt werden. Die abgeführte Wärme muss gleichzeitig vom Aufheizer in den Wärmeträger eingetragen werden. In der Regel wird die Reaktion durch stufenweise Erhöhung von Durchsatz und/oder Konzentration angefahren. Bei Anlaufen der Reaktion wird der Aufheizer in dem Maße außer Betrieb genommen, wie die Reaktion Wärme erzeugt. Ist die Reaktion angelaufen und der Aufheizer außer Betrieb genommen, so wird entsprechend der sich erhöhenden Wärmemenge durch ein Regelventil die Wärmeträgermenge durch den Sattdampferzeuger erhöht und ebenso die verdampfte Wassermenge als Speisewasser ergänzt. Durch eine Sollwertvorgabe für die Salzbadtemperatur werden schließlich konstante Betriebsbedingungen erreicht.

Für den Sattdampferzeuger gelten ähnliche Überlegungen wie für den Reaktor, d.h. bevor dieser in Betrieb geht, muss auch dieser aufgeheizt werden. Das Vorgehen wurde bereits in einem der vorangehenden Abschnitte "Anfahren des Reaktors bis auf Salzbadtemperatur" besprochen. Ebenso wie der Sattdampferzeuger selbst kann auch das Speisewasser vorgewärmt werden. Dies kann z.B. in einem Speisewasservorwärmer geschehen.

Dieser kann auch im Salzumwälzkreislauf angeordnet sein. Das Speisewasser sollte auf mindestens 100°C vorgewärmt werden.

Der Wärmeträger wird mittels der Umwälzeinrichtung umgewälzt. Um Kavitation oder aufwändigen konstruktiven Maßnahmen dagegen vorzubeugen, fördert die Umwälzeinrichtung bevorzugt nach unten. Ein Hauptstrom wird zum Rohrbündelreaktor gefördert, ein kleinerer Nebenstrom zu einem Kühler, welcher wie weiter oben beschrieben als gasgekühlter oder flüssigkeitsgekühlter Wärmetauscher ausgeführt sein kann oder als Verdampfungskühler arbeitet. Es sind noch andere Ausführungen möglich, z.B. kann er bei geringerer Wärmeentwicklung im Reaktor als Speisewasservorwärmer ausgeführt sein. Nach Durchlaufen des Kühlers gelangt der Wärmeträger wieder in den Eingangsbereich der Umwälzeinrichtung, wo er sich mit dem aus dem Rohrbündelreaktor kommenden Hauptstrom des Wärmeträgers vereinigt und mit diesem gemeinsam wieder zur Umwälzeinrichtung strömt. Die Umwälzeinrichtung übernimmt dabei gleichzeitig die Funktion des Mischers, damit der gekühlte Wärmeträger mit einem vergleichmäßigten Temperaturprofil in den Reaktor gelangt. Vor Beginn der Reaktion jedoch ist der Wärmeträgerstrom durch den Kühler zunächst noch durch ein Regelventil abgesperrt. Gegebenenfalls wird er sogar anfangs noch durch einen Bypass am Reaktor vorbeigeführt. Nach diesen vorbereitenden Arbeitsgängen nun wird der Prozess durchgeführt. Das Regelventil zum Kühler des Wärmeträgers wird in Abhängigkeit von der im Reaktor produzierten Wärmemenge geöffnet oder geschlossen.

Die Temperatur des Kühlmediums im Kühler ist meist vorgegeben, besonders, wenn der Kühler als Dampferzeuger ausgeführt wird. Ein wesentliches Merkmal des erzeugten Dampfes ist sein Druck. Die Höhe des Drucks beeinflusst wesentlich seine weitere Verwendung. Weiterhin ist diese Größe wesentlich für die Auslegung des Dampfleitungssystems. Daraus ergibt sich, dass der Druck im Wesentlichen festgelegt ist und nur in engen Grenzen verändert werden kann. Liegt der Dampf als Sattdampf vor, so ergibt sich daraus unmittelbar die Sattdampftemperatur. Entsprechend bewegt sich auch die Sattdampftemperatur ebenfalls nur in engen Grenzen.

Die im Kühler abzugebende Wärmemenge ist durch den gegebenen Prozess im Reaktor festgelegt. Sie legt die Enthalpiedifferenz des Wärmeträgers zwischen dem Eingang und dem Ausgang des Kühlers fest. Die Enthalpie ist definiert als das Produkt aus Dichte, spezifischer Wärmekapazität, Volumenstrom und Temperatur. Während die Dichte und die Wärmekapazität Stoffwerte sind, die sich im Betriebsbereich nur wenig ändern, sind Volumenstrom und Temperatur in größeren Bereichen veränderbar. Eine gleiche abzugebende Wärmemenge kann so z.B. durch einen kleinen Volumenstrom und eine große Temperaturdifferenz oder durch einen großen Volumenstrom und eine kleine Temperaturdifferenz erreicht werden. In der Praxis ergeben sich Einschränkungen in der Temperaturdifferenz durch die schon beschriebene weitgehende Festlegung des Kühlmediums des Kühlers, speziell in der Ausführung als Dampferzeuger, und in der Temperatur des Wärmeträgers durch den Reaktor, weil die Wärmeträgertemperatur maßgeblichen Einfluss auf den Verlauf der Reaktion hat und daher in einem engen Bereich festgelegt ist.

Mit dieser Randbedingung erfolgt nun die Auslegung des Kühlers, dessen Wärmeübertragungsleistung durch die mittlere Temperaturdifferenz zwischen Wärmeträger und Kühlmedium sowie dem Wärmedurchgangskoeffizienten und der Wärmeübertragungsfläche bestimmt ist. Dabei ist der Wärmedurchgangskoeffizient u.a. auch vom Volumenstrom des Wärmeträgers abhängig: je höher der Volumenstrom, umso besser der Wärmedurchgangskoeffizient. So ergibt sich aus der Festlegung der Wärmeübertragungsfläche und der mittleren Temperaturdifferenz der Volumenstrom oder aus der Festlegung des Volumenstroms die Wärmeübertragungsfläche.

In ähnlicher Weise wird die Wärmeübertragungsfläche der Reaktionsrohre und der Volumenstrom des Wärmeträgers durch den Reaktor ermittelt. Die Umwälzeinrichtung wird nun so ausgelegt, dass sie die Summe der Volumenströme des Wärmeträgers durch den Reaktor und durch den Kühler unter Berücksichtigung der Druckverluste fördern kann.

Die vorstehenden Erläuterungen geben einen allgemeinen Überblick über den Auslegungsprozess, der der Anwendung des erfindungsgemäßen Verfahrens vorausgeht, und dienen dem besseren Verständnis der Erfindung. Die einzelnen Abhängigkeiten sind tatsächlich wesentlich komplexer und sind in einschlägigen Auslegungsregelwerken näher beschrieben. Weitere Einflussfaktoren für die Auslegung sind die Investitions- und Betriebskosten der sich aus der Auslegung ergebenden Dimensionen der Apparate und Maschinen. In einem iterativen Prozess wird versucht, eine optimale Kombination von technischen und wirtschaftlichen Größen zu erreichen.

Das Ergebnis dieser Betrachtungen ist, dass es von dem jeweiligen Einzelfall abhängt, welche Abmessungen und Betriebsbedingungen besonders vorteilhaft sind, da jede Größe von einer Vielzahl anderer physikalischer, technischer und wirtschaftlicher Beziehungen abhängig ist.

Ist das Reaktorsystem einmal ausgelegt, so ist man bestrebt, dieses mit möglichst wenig Aufwand sicher zu betreiben. Eine wichtige Regelgröße in diesem Zusammenhang ist die Temperatur des in den Reaktor eintretenden Wärmeträgers. Diese Temperatur wird an Temperaturmessstellen in der Zulaufleitung und im Verteilerkanal gemessen, wobei die Informationen über die Temperatur im Verteilerkanal nur im wesentlichen informativen Charakter haben. Gleiches trifft für Temperaturmessstellen zu, die im Sammelkanal bzw. Ablaufkanal angeordnet sind. Weitere Temperaturmessstellen können am Ein- bzw. Ausgang des Wärmetauschers angeordnet werden, die ebenfalls nur informativen Charakter haben und nicht zur Temperaturregelung herangezogen werden. Sie können in einem anderen Zusammenhang zur Überprüfung des Wirkungsgrades des Wärmetauschers verwendet werden.

Besonders vorteilhaft hat sich ein Regelungssystem herausgestellt, bei dem lediglich die Wärmeträgertemperatur am Wärmeträgereingang des Reaktors gemessen wird und mit dem selbsttätig der Volumenstrom durch den Wärmetauscher durch ein Regelventil geregelt wird. Zusätzliche Temperaturmessungen am Austritt des Wärmetauschers, die zusätzlich auch der Temperaturregelung dienen, haben sich als nicht notwendig erwiesen.

Durch dieses Verfahren der Auslegung und zum Betrieb ergeben sich in der Praxis Volumenströme durch den Wärmetauscher, die im Bereich zwischen 5 und 15%, bezogen auf den Volumenstrom durch den Reaktormantel, liegen.

### 11 Abfahren der Reaktion und Warmhalten des Reaktors

Zum Abschalten der Reaktion wird die Feedgas-Zufuhr je nach Art des Prozesses entweder spontan gestoppt oder sehr langsam reduziert. Im Allgemeinen sollten große sprunghafte Änderungen der Prozessparameter vermieden werden, da z.B. schnelle Änderungen in der Beladung zu einer Überreaktion des Regelkreises und damit verbunden zu Salztemperaturschwankungen führen können, die ihrerseits wieder negative Folgen für den Prozess oder den Katalysator haben können und deshalb vermieden werden sollten.

Bei kurzzeitigen Betriebsabschaltungen mit Abschaltung des Feedgases sollte das Wärmeträgersalz auf Temperatur gehalten werden, um die Notwendigkeit eines erneuten Aufheizens zu vermeiden.

Zunächst wird die Feedgas-Zufuhr gemäß der Betriebsanleitung des Lizenzgebers gestoppt und/oder durch einen geringfügigen Inertgasstrom ersetzt. Je nach Erfordernis für das Warmhalten werden mehr oder weniger Heizgruppen des E-Aufheizers eingeschaltet. Während des Warmhaltevorgangs bleibt die Salzumwälzpumpe in Betrieb. Falls dies nicht möglich ist, so muss auch der E-Aufheizer abgeschaltet werden. In diesem Fall muss der Salzeintrittskanal zum E-Aufheizer ständig dampfbeheizt sein, um ein Verstopfen des Kanals mit festem Salz sicher zu verhindern. Das Dampfsystem ist ebenso in Betrieb zu halten.

### 12 Abfahren des Reaktors

Das Abkühlen sowie das Entleeren und Abkühlen des Reaktorsystems auf Umgebungstemperatur erfolgt analog nach vorstehenden Ausführungen für den Heißtest.

### Normalbetrieb, Salz vor Start im Reaktor

Alternativ zu vorstehendem Verfahren zum An- und Abfahren des Reaktors kann das Salz beim Abkühlvorgang auch im Reaktor verbleiben. Es wird im Folgenden nur auf die Unterschiede zu vorgeschriebenem Verfahren eingegangen.

Soll ein Reaktor aufgeheizt werden, bei dem der Wärmeträger Salz im Mantelraum in fester Form vorliegt, so darf das Temperiergas ausschließlich nur von oben nach unten durch die Reaktionsrohre geführt werden, damit sich das aufgeschmolzene Salz, welches ein größeres Volumen einnimmt als das feste Salz, ungehindert nach oben ausdehnen kann.

Im Übrigen sind die gleichen Verfahrensschritte durchzuführen und dieselben Temperaturbedingungen einzuhalten wie beim vorbeschriebenen Anfahren eines Reaktors, bei dem sich der Wärmeträger Salz zu Beginn in einem Salztank befindet. Ebenso sind nach Erreichen der Solltemperatur gegebenenfalls alle Hauptflanschverbindungsschrauben sowie auch die Stopfbüchsen der Thermoelemente nachzuziehen. Beim Anfahren und der Durchführung des Prozesses gibt es keine Unterschiede.

Das Abfahren des Reaktors erfolgt nach vorbeschriebenen Verfahrensschritten mit dem Unterschied, dass das Salz nicht in den Salztank entleert wird, sondern weitestgehend im Reaktorsystem verbleibt. Kurz vor Erreichen der Erstarrungstemperatur ist der Salzstand jedoch, falls erforderlich, noch sicher unter die Unterkante des oberen Rohrbodens durch Ablassen abzusenken. Die Richtung des abkühlenden Temperiergases ist dabei grundsätzlich nicht eingeschränkt. Wird das Gas von oben nach unten geführt, so erstarrt das Salz von oben nach unten, was zur Folge hat, dass sich darunter Lunker bilden. Bevorzugt wird daher das abkühlende Temperiergas von unten nach oben durch die Reaktionsrohre geleitet. Hier wird die Lunkerbildung deutlich reduziert, da während des Erstarrungsprozesses das oben befindliche flüssige Salz dem sich vermindernden Volumen des erstarrten Salzes im unteren Teil des Reaktors nachfolgen kann.

Die Erfindung wird im Folgenden anhand der Zeichnungen beispielhalber noch näher erläutert. Es zeigen:
- Fig. 1: in schematischer Darstellung einen Längsschnitt durch ein Reaktorsystem für exotherme Reaktionen, das einen einzonigen Rohrbündelreaktor, eine Umwälzeinrichtung und einen Kühler aufweist und auf das das erfindungsgemäße Verfahren in einem ersten Ausführungsbeispiel angewendet wird;
- Fig. 2a: einen Längsschnitt durch den Rohrbündelreaktor aus Fig. 1 mit Temperaturmessstellen;
- Fig. 2b: ein Diagramm mit Temperaturverläufen über die Reaktorlänge;
- Fig. 3: einen Längsschnitt durch die Umwälzeinrichtung aus Fig. 1 mit einer weiteren Ausführungsform eines Kühlers;
- Fig. 4: ein Diagramm für das Anfahren, mit dem qualitativen zeitlichen Verlauf der Temperaturen des Temperiergases am Eintritt in den bzw. am Austritt aus dem Reaktor, des Wärmeträgers, des eintrittsseitigen Rohrbodens und der kältesten Stelle des Reaktors;
- Fig. 5: ein Diagramm für das Abfahren, mit dem qualitativen zeitlichen Verlauf der Temperaturen aus Fig.4;
- Fig. 6: in schematischer Darstellung ein der Fig. 1 ähnliches Reaktorsystem, das einen Mehrzonenreaktor aufweist und auf das das erfindungsgemäße Verfahren in einem zweiten Ausführungsbeispiel angewendet wird.

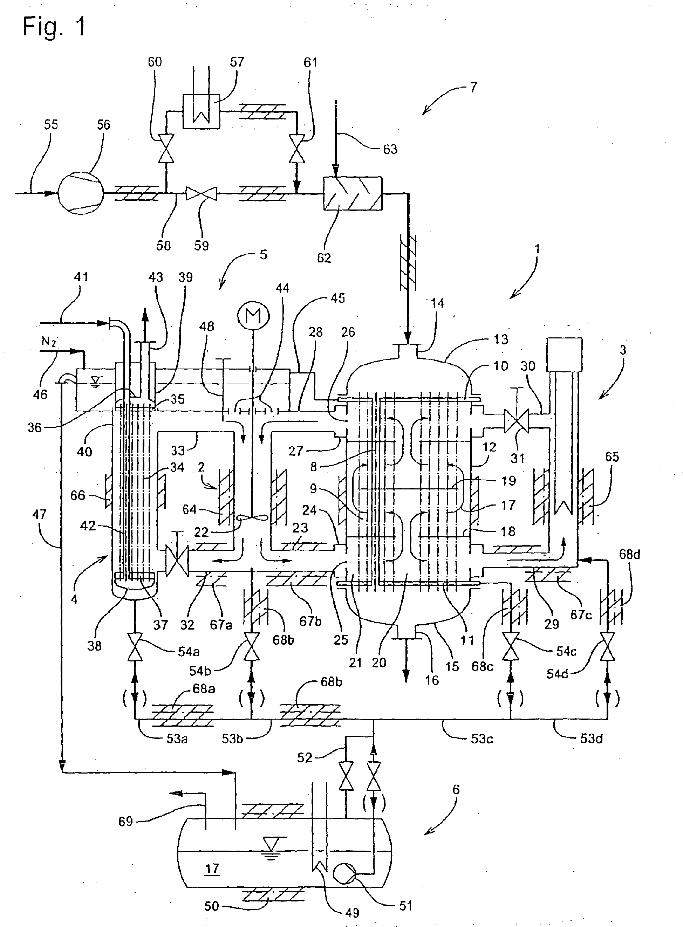

Fig. 1 zeigt eine erste Ausführungsform eines Reaktorsystems für das erfindungsgemäße Verfahren. Das Reaktorsystem ist für exotherme Gasphasenreaktionen ausgelegt. Als Wärmeträger wird Salz verwendet. Die Hauptkomponenten des hier beispielhaft gezeigten Reaktorsystems sind im wesentlichen ein einzoniger Reaktor 1, eine Umwälzeinrichtung 2, ein Aufheizer 3, ein Kühler 4, ein Ausgleichsbehälter 5, ein Salztank 6 sowie eine Gasbehandlungsvorrichtung 7, mit welcher ein Temperiergas bzw. ein Reaktionsgasgemisch hergestellt wird.

In der dargestellten Ausführungsform ist der Reaktor 1 als Rohrbündelreaktor ausgeführt. Er weist eine Vielzahl von katalysatorgefüllten Reaktionsrohren 8 auf, die ein Rohrbündel 9 bilden. Die Reaktionsrohre 8 enden abdichtend in einem oberen Rohrboden 10 und in einem unteren Rohrboden 11. Das Rohrbündel 9 ist von einem isolierten Mantel 12 umschlossen, welcher mit dem oberen Rohrboden 10 und mit dem unteren Rohrboden 11 verbunden ist. Gegebenenfalls verfügt der Mantel 12 über hier nicht dargestellte Kompensatoren zur Aufnahme von Temperaturspannungen. Der obere Rohrboden 10 wird von einer oberen Haube 13 mit einem Gaseintrittsstutzen 14, der untere Rohrboden 11 von einer unteren Haube 15 mit einem Gasaustrittsstutzen 16 umspannt bzw. überdeckt. Der Mantelraum des Reaktors 1 wird von flüssigem Salz 17 als Wärmeträger umströmt. Er wird dabei vorzugsweise durch ringförmige Umlenkbleche 18 und mit diesen im Wechsel angeordnete scheibenförmige Umlenkbleche 19, im dargestellten Ausführungsbeispiel nur ein Umlenkblech 19, durch den Reaktor 1 geführt. Das Rohrbündelinnere 20 als auch der äußere Mantelraum 21 zwischen dem Äußeren des Rohrbündels 9 und dem Mantel 12 bleibt unberohrt.

Das flüssige Salz 17 wird durch eine Umwälzeinrichtung 2 durch das Reaktorsystem gefördert. Die Umwälzeinrichtung 2 ist zumeist eine mit einem Motor M angetriebene Pumpe mit Laufrad 22, welche den Wärmeträger 17 zur Vermeidung von Kavitation nach unten fördert. Der Hauptstrom des Wärmeträgers 17 wird über eine kurze untere Reaktorzuleitung 23 zum Reaktor 1 gefördert. Über einen unteren Verteilerkanal 24 wird er am Reaktor 1 verteilt. Durch entsprechend gestaltete untere Mantelöffnungen 25 wird der Wärmeträger 17 gleichmäßig über den Reaktorumfang verteilt. Hat der Reaktor einen kreisförmigen Querschnitt und wird der Wärmeträger 17 wie weiter oben beschrieben gleichmäßig über den Umfang von außen nach innen und wieder von innen nach außen geführt, so sind die Mantelöffnungen 25 entsprechend dem Strömungsdruck so dimensioniert, dass der Wärmeträger 17 über den Umfang gleichmäßig über den äußeren Mantelraum 21 des Reaktors 1 geführt wird. Nach Durchlaufen des Reaktors tritt das flüssige Salz in analoger Weise wie beim Einströmen in den Reaktor aus dem Reaktor durch obere Mantelöffnungen 26 wieder aus in einen oberen Verteilerkanal 27. Über eine obere Reaktorableitung 28 gelangt das flüssige Salz wieder in den Eingangsbereich der Umwälzeinrichtung 2.

An den unteren Verteilerkanal 24 und an den oberen Verteilerkanal 27 ist weiterhin ein Aufheizer 3 für den Wärmeträger über eine kurze Aufheizerzuleitung 29 und eine obere Aufheizerableitung 30 angeschlossen. Gegebenenfalls kann der Salzstrom noch über ein Aufheizer-Regelventil 31 eingestellt werden. Der Aufheizer 3 wird bevorzugt elektrisch betrieben (E-Aufheizer), jedoch sind auch andere Bauarten möglich.

Die im Reaktor 1 erzeugte Reaktionswärme wird durch einen Kühler 4 abgeführt. In der dargestellten Ausführungsform ist dieser als Dampferzeuger ausgeführt und an der Umwälzeinrichtung 2 über eine kurze Kühlerzulaufleitung 32 und eine kurze Kühlerablaufleitung 33 - und damit auch an den Reaktor 1 - angeschlossen. Der Kühler 4 weist ein Bündel von Verdampferrohren 34 auf, welches an seinen beiden Enden durch Rohrböden dichtend abgeschlossen wird. Der obere Kühlerrohrboden 35 wird von einer oberen Kühlerhaube 36 umschlossen bzw. überdeckt, der untere Kühlerrohrboden 37 von einer unteren Kühlerhaube 38. Der obere Kühlerrohrboden 35 ist durch ein Verbindungsgehäuse 39 fest am Ausgleichsbehälter 5 verbunden, der untere Kühlerrohrboden 37 ist axial im Kühlergehäuse 40 frei beweglich. Das Speisewasser 41 wird über eine Speisewasserleitung 42 zugeführt. Sie führt durch den oberen Kühlerrohrboden 35 und mündet in die untere Kühlerhaube 38. Der Wärmeträger umströmt die Verdampferrohre 34 mittels (hier nicht gezeigter) geeigneter Umlenkscheiben und bringt das in den Verdampferrohren befindliche Wasser teilweise zum Verdampfen. Das so erhaltene Dampf-Wasser-Gemisch gelangt über eine Steigleitung 43 in einen (hier nicht dargestellten) Dampfabscheider, wo der Dampf abgetrennt und dem Dampfsystem zugeführt wird und das abgeschiedene Wasser als Teil des Speisewassers dem Kühler wieder zugeführt wird.

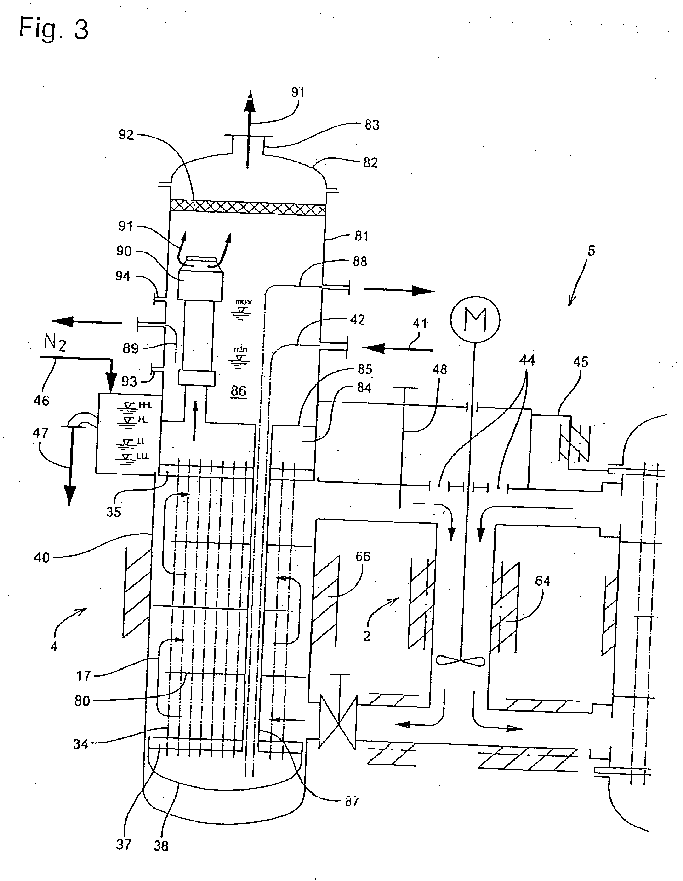

Der im Reaktorsystem zirkulierende Wärmeträger 17 ist an mindestens einer Stelle durch Verbindungsstellen 44 mit einem Ausgleichsbehälter 5 verbunden. Eine weitere Verbindung ist gebildet durch eine mit isolierter Begleitheizung ausgestattete Entgasungsleitung 45 zwischen dem Gasraum des Ausgleichsbehälters 5 und einer Entgasungsstelle am Hochpunkt oder auch an anderen. Stellen des Wärmeträger-Mantelraums im Reaktor 1. Der Wärmeträgerraum des gesamten Reaktorsystems wird mit Stickstoff N₂ als Inertgas über eine Stickstoffleitung 46 gespült. Ist das Fassungsvermögen des Ausgleichsbehälters 5 erreicht, so läuft der Wärmeträger über eine Überlaufleitung 47 an einen sicheren Ort mit ausreichendem Fassungsvermögen oder direkt in den Salztank 6 wieder zurück. Im Ausgleichsbehälter wird der Flüssigkeitsstand mit einer Füllstandsmessung 48 gemessen. Bei bestimmten Flüssigkeitsständen werden entsprechende Maßnahmen ausgelöst. Charakteristische Flüssigkeitsstände sind in Fig. 3 näher dargestellt. Läuft der Ausgleichsbehälter über, so ist das Niveau "HL" erreicht, und es wird ein Alarm ausgelöst. Steigt die Flüssigkeit schneller als sie abfließt und erreicht sie das Niveau "HHL", so wird die Anlage automatisch heruntergefahren. Im anderen Fall, wenn der Flüssigkeitsspiegel auf einen Wert unter "LL" sinkt, wird Alarm ausgelöst, um auf eine erforderliche Nachspeisung aus dem Salztank 6 hinzuweisen. Wird das minimal zulässige Niveau "LLL" erreicht, so wird die Anlage automatisch heruntergefahren. Das Niveau "LLL" liegt über der Unterkante des oberen Rohrbodens 10 des Reaktors.

Der Wärmeträger Salz befindet sich in dem Salztank 6. Das Salz ist beim ersten Einfüllen im festen Zustand. Beim Anfahren des Reaktorsystems wird es durch eine innere Heizung 49 oder durch eine äußere Heizung 50 mit Isolierung aufgeschmolzen. Bis zu diesem Zeitpunkt ist das übrige Reaktorsystem noch frei von Salz. Ab dem Zeitpunkt, wo das Salz aufgeschmolzen und pumpfähig ist, kann es mit einer Salztankpumpe 51 über eine Rücklaufleitung 52 im Kreislauf gefahren werden, um den Aufschmelzvorgang zu vergleichmäßigen und zu beschleunigen. Der Salztank 6 ist über mehrere Salzverbindungsleitungen 53a, 53b, 53c, 53d, mit den einzelnen Komponenten des Reaktorsystems verbunden. Die Salzverbindungsleitungen besitzen jeweils ein Absperrventil 54a, 54b, 54c und 54d.

Beim Anfahren wird in einer Gasbehandlungsvorrichtung 7 zunächst geeignetes Temperiergas 55 mit einem Gebläse 56 zu einem Gaserhitzer 57 gefördert, welcher sich in einem isolierten Bypass zur isolierten Gashauptleitung 58 befindet. Die Gasführung erfolgt mit entsprechenden Gasabsperrarmaturen 59, 60, 61. Die Temperatur des Temperiergases 55 wird in einem Gasmischer 62 vergleichmäßigt. Hat der Reaktor zu einem späteren Zeitpunkt Betriebstemperatur, so wird der Gaserhitzer 57 außer Betrieb genommen, die umzusetzenden Reaktionsgaskomponenten über eine Zufuhrleitung 63 dem Gasstrom zugesetzt und in einem oder mehreren Gasmischern 62 mit diesem vergleichmäßigt. Zunächst jedoch durchströmt das Temperiergas während des Aufheizvorgangs die Gasräume des Reaktors 1. Das Aufheizen erfolgt dabei mit den erfindungsgemäßen Bedingungen bezüglich der zeitlich gemittelten Änderungsgeschwindigkeit der Temperatur des Temperiergases 55 bei dessen Austritt aus den Reaktionsrohren 8. Diese Änderungsgeschwindigkeit wird über einen Zeitraum gemittelt, der mit dem ersten Einleiten des Temperiergases beginnt, und darf 30°C/h nicht überschreiten. Hat der Reaktor 1 eine bestimmte Temperatur erreicht, so werden die isolierten Begleitheizungen an Pumpengehäuse 64, Aufheizer 65, Kühlergehäuse 66 und die hier nicht vollständig dargestellten isolierten Begleitheizungen an Verbindungsleitungen 67a, 67b, 67c untereinander und an Verbindungsleitungen 68a, 68b, 68c, 68d zum Salztank in Betrieb genommen.

Ist das Reaktorsystem genügend über der Schmelztemperatur des Salzes 17 vorgewärmt und liegt die Temperatur des Salzes im Salztank 6 bei Salzeinfülltemperatur, so wird die Kreislaufführung des Salzes im Salztank außer Betrieb genommen, die Absperrventile 54a, 54b, 54c und 54d geöffnet und mit dem Füllen des Reaktorsystems mit flüssigem Salz begonnen. Die Änderung des Gasvolumens im Salztank wird durch die Überlaufleitung 47 und die Be- und Entlüftungsleitung 69 ausgeglichen. Während des Füllvorgangs wird der Flüssigkeitsstand des Wärmeträgers mit der Füllstandsmessung 48 gemessen. Zeigt diese einen Mindestfüllstand an, so wird die Salzzufuhr durch Schließen der Absperrventile 54a, 54b, 54c und 54d beendet und die Salztankpumpe 51 ausgeschaltet. Gleichzeitig oder zeitlich versetzt wird die Zufuhr des Temperiergases 55 eingestellt, ebenso der Betrieb der Dampfbegleitheizungen mit Ausnahme derjenigen der Entleerungs- und Überlaufleitungen. Die Umwälzeinrichtung 2 und der Aufheizer 3 werden in Betrieb genommen. Mit vorhergehender Freigabe einer optionalen Absperrarmatur 31 wird der Weg des mit dem Aufheizer 3 erhitzten Wärmeträgers zum Reaktor 1 freigegeben. Als Messprinzip wird bevorzugt das Gaseinperlverfahren eingesetzt, bei dem gleichzeitig die Flüssigkeitsoberfläche mit Stickstoff als Arbeitsgas überdeckt und geschützt wird. Zusätzlich kann der Stickstoff über eine weitere Stickstoffleitung 46 zugeführt werden.

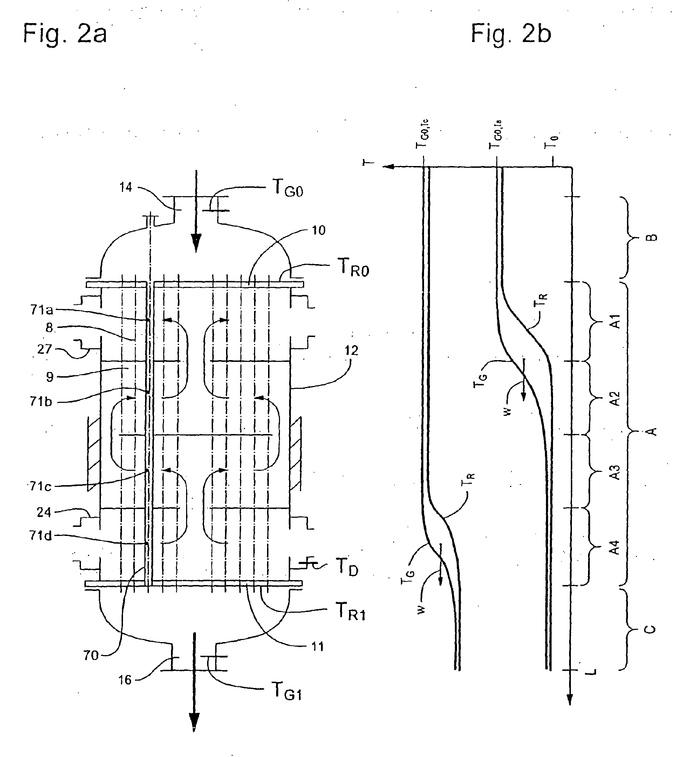

Fig. 2a und 2b zeigt den Reaktor 1 mit seiner Hauptgliederung und seinen Temperaturmessstellen. Zum Reaktorhauptteil A gehören der Reaktormantel 12, das Rohrbündel 9, der untere Rohrboden 11, der obere Rohrboden 10 und die an den Mantel 12 angeschlossenen Verteilerkanäle 24 und 27, die in diesem Beispiel als Ringkanäle ausgeführt sind. Am oberen Ende des Reaktorhauptteils A schließt sich der Gaseintrittsteil B an, mit der oberen Haube 13 und dem Gaseintrittsstutzen 14, und am unteren Ende der Gasaustrittsteil C, mit der unteren Haube 15 und der Gasaustrittsstutzen 16.

Als Temperiergas-Temperatur T_{G} wird die Gaseintrittstemperatur T_{G0} im Gaseintrittsstutzen 14 sowie die Gasaustrittstemperatur T_{G1} im Gasaustrittsstutzen 16 gemessen. Als Reaktortemperatur T_{R} auf der Gaseintrittsseite wird die Temperatur T_{R0} des oberen, gaseintrittsseitigen Rohrbodens 10 gemessen, und als Reaktortemperatur T_{R} auf der Gasaustrittsseite die Temperatur T_{R1} des unteren, gasaustrittsseitigen Rohrbodens 11. Ferner wird als Temperatur der kältesten Stelle im Reaktor 1 die Temperatur T_{D} im unteren Verteilerkanal 24 gemessen.

T_{G0} und T_{G1} entsprechen den Temperaturen des Temperiergases 55 bei dessen Eintritt in die Reaktionsrohre 8 bzw. bei dessen Austritt aus den Reaktionsrohren 8 oder ermöglichen die Ermittlung dieser Temperaturen. Gegebenenfalls werden diese Temperaturen auch direkt gemessen. Die Reaktortemperaturen T_{R} längs des Reaktors 1 werden in mindestens einem im Rohrbündel 9 angeordneten Thermorohr 70 an mehreren Temperaturmessstellen gemessen, im dargestellten Ausführungsbeispiel an vier Temperaturmessstellen 71a, 71b, 71c, 71d.

Der dem Gaseintrittsstutzen 14 entgegengesetzte Verteilerkanal 24 ist während des Aufheizvorgangs in der Phase I der kälteste Reaktorteil. Denn die Temperatur des Reaktors 1 ändert sich durch das Temperiergas 55 ausgehend von dessen Eintrittsstelle nicht nur in axialer Richtung, sondern auch in radialer Richtung, wobei die Entfernung zum exponiert liegenden unteren Verteilerkanal 24 am größten ist, so dass sich dort die kälteste Stelle des Reaktors 1 befindet.

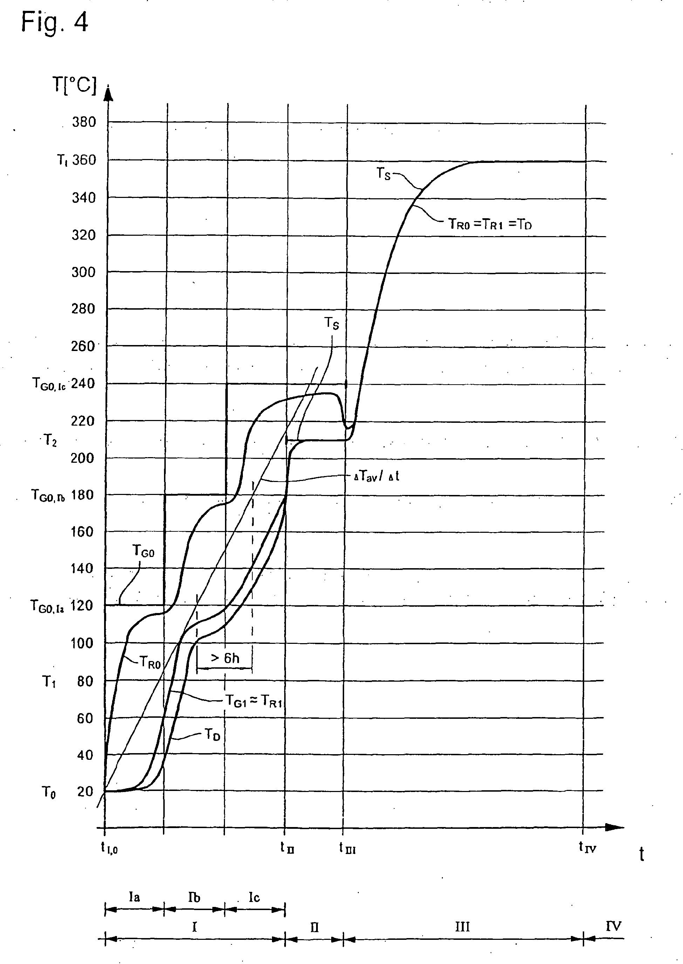

Die Fig. 2b zeigt innerhalb einer Zeitphase I zu Beginn des Anfahrens (siehe Fig. 4) typische Verläufe der Temperiergas-Temperatur T_{G} und der Reaktortemperatur T_{R} über die Reaktorlänge L. Die Erhöhung der Temperatur T_{G} des Temperiergases 55 erfolgt aus konstruktiven Gründen meist schrittweise. Im in den Fig. 2b und 4 dargestellten Beispiel erfolgt die Temperaturerhöhung in drei Schritten bzw. Teilphasen Ia, Ib, Ic mit den entsprechenden Temperaturen T_{G0,Ia}, T_{G0,Ib} und T_{G0,Ic}.

Die unteren beiden Kurven in Fig. 2b stellen die typischen Temperaturverläufe in Teilphase Ia dar.

In Teilphase Ia hat der überwiegende Teil des Reaktors noch Umgebungstemperatur T₀. Im Anfangsbereich im Abschnitt A1 (Fig. 2b) überträgt das Temperiergas 55 mit seiner Eintrittstemperatur T_{G0,Ia} seine Wärme auf die Reaktionsrohre 8. Dieser Wärmeübertragungsprozess reicht noch in die Abschnitte A2 und A3 hinein. Ab dem Ende des Abschnitts A3 hat das Temperiergas 55 im Wesentlichen die Temperatur der Reaktionsrohre 8 angenommen, d.h. es hat sich auf die Umgebungstemperatur T₀ abgekühlt, so dass bis zum Reaktoraustritt keine Temperaturänderungen mehr stattfinden. Bis zum Beginn des Abschnitts A1 ist der Reaktor 1 schon nahezu auf die Eintrittstemperatur T_{G0,Ia} des Temperiergases 55 erwärmt, wohingegen am Ende des Abschnitts A1 der Reaktor 1 noch Umgebungstemperatur T₀ hat. Die Wärmeübertragung auf den Reaktor 1 erfolgt also mit deutlicher Zeitverzögerung. Die Wärmeübertragungszone bzw. -walze bewegt sich, wie mit dem Pfeil W angedeutet, langsam durch den Reaktor 1 vom Anfang bis zum Ende. Dabei werden mit Hilfe der Temperaturmessstellen bei 71a, 71b, 71c und 71d die Temperaturen und Temperaturdifferenzen im Reaktor 1 kontrolliert.

Die oberen beiden Kurven in Fig. 2b stellen die typischen Temperaturverläufe in Teilphase Ic dar.

Im dargestellten Zeitpunkt wurde der Reaktor 1 bis zum Ende des Abschnitts A3 nahezu auf die Eintrittstemperatur T_{G0,Ic} des Temperiergases 55 aufgeheizt. Im letzten Abschnitt A4 ist noch ein Temperaturgefälle zwischen dem Temperiergas 55 und Reaktor 1 vorhanden, wobei dessen Temperatur T_{R} bzw. die Temperatur T_{G} des Temperiergases 55 am Ende des Abschnitts A4 zum dargestellten Zeitpunkt noch auf den Niveaus der entsprechenden Temperaturen der vorangegangenen Teilphase Ib liegen, bei T_{G0,Ib}. Somit findet in der Teilphase Ic im Abschnitt A4 die Wärmeübertragung statt, die zuvor in ähnlicher Weise in der Teilphase Ia im Abschnitt A1 erfolgte.

In Fig. 3 ist eine Variante des in Fig. 1 dargestellten Kühlers bzw. Dampferzeugers 4 gezeigt. Hier wird der Wärmeträger 17 mit einer Reihe in Axialrichtung aufeinander folgender Umlenkbleche 80 quer zu den Verdampferrohren 34 geführt. Die Umlenkbleche 80 bilden in diesem Beispiel an jeweils einem ihrer Enden Strömungsdurchtritte aus, wobei die Strömungsdurchtritte benachbarter Umlenkbleche 80 an entgegengesetzten Enden liegen. Die Umlenkbleche 80 können jedoch ebenso gut ring- und scheibenförmig ähnlich wie beim Reaktor 1 ausgeführt sein. Nach dem Durchlaufen des Dampferzeugers 4 strömt der gekühlte Wärmeträger 17 in den Eingang der Umwälzeinrichtung 2 zurück. Die weitere Führung des Wärmeträgers 17 entspricht der in Fig. 1 gezeigten und wurde dort bereits näher beschrieben.

Der Verdampferteil des Dampferzeugers 4 ist hinsichtlich Verdampferrohre 34, Kühlerrohrböden 35, 37 und unterer Kühlerhaube 38 identisch mit demjenigen, wie in Fig. 1 dargestellt. Im Unterschied dazu wird bei der Ausführungsform nach Fig. 3 das aufsteigende Wasser-Dampf-Gemisch noch im Dampferzeuger 4 selbst getrennt. Hierzu wird an den oberen Kühlerrohrboden 35 ein zylindrisches Kühlergehäuse 81 angesetzt. Daran schließt sich eine obere Kühlerhaube 82 mit Dampfaustrittsstutzen 83 an. Bei dieser Konstruktion strömt das in den Verdampferrohren 34 erzeugte Wasser-Dampf-Gemisch zunächst in einen Sammelraum 84, welcher nach oben hin durch eine Trennplatte 85 abgeschlossen ist. Das Speisewasser 41 wird über eine Speisewasserleitung 42 in den Flüssigkeitsraum 86 über der Trennplatte 85 geführt, von wo es über ein Kühler-Verbindungsrohr 87 in den Raum der unteren Kühlerhaube 38 strömt. Die Speisewasserleitung 42 kann teilweise auch direkt in diesen Raum weiter geführt werden. Ebenfalls durch dieses Verbindungsrohr 87 wird eine Sumpfabzugsleitung 88 geführt, welche bei Bedarf Ablagerungen am Boden der unteren Kühlerhaube 38 absaugt. Über eine Oberflächenentschlammungsleitung 89 werden eingetragene Schwimmstoffe entfernt.

Das im Sammelraum 84 befindliche Wasser-Dampf-Gemisch steigt über eine Öffnung in der Trennplatte 85 in einen Zyklonabscheider 90. Der abgeschiedene Dampf 91 wird in einem Feinabscheider 92 von Feinsttropfen befreit und verlässt den Kühler 4 über den Dampfaustrittsstutzen 83. Die flüssige Phase läuft in den Flüssigkeitsraum 86 zurück. Der Flüssigkeitsstand wird über Messstutzen 93 und 94 gemessen und über die Menge des zügeführten Speisewassers 41 geregelt. Die Anzahl der auf der Trennplatte 85 befindlichen Zyklonabscheider 90 steht im Wesentlichen in Abhängigkeit von der abzuscheidenden Dampfmenge.

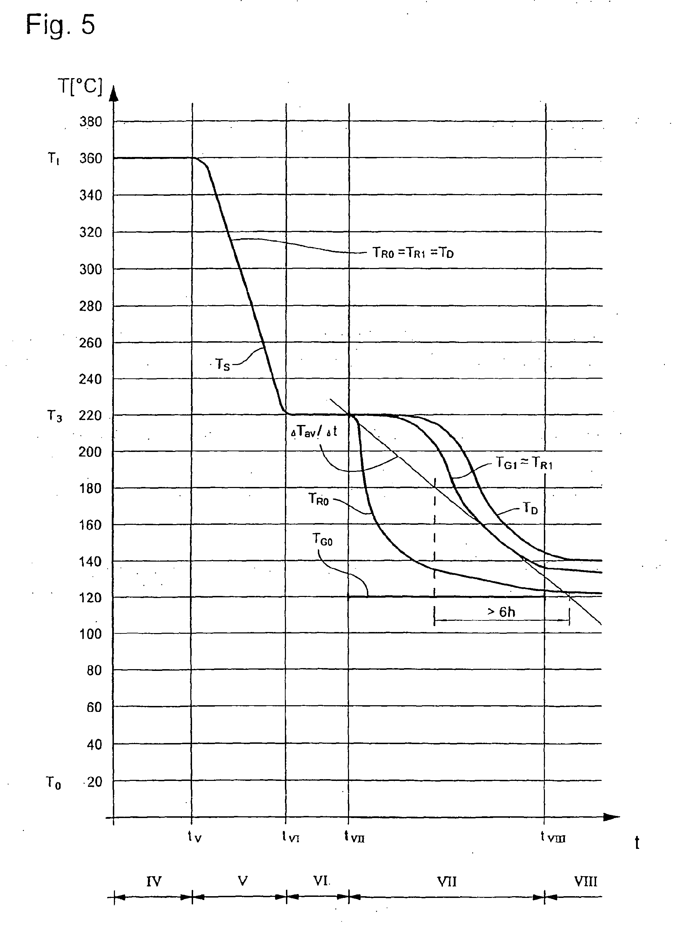

Fig. 4 und 5 zeigen qualitativ den Verlauf der Temperaturen T_{G0}, T_{G1}, T_{R0}, T_{D} (siehe Fig. 2a) und T_{S} (Salztemperatur) über der Zeit t an einem Reaktor über einen kompletten Zyklus Anfahren/Abfahren, mit Vorwärmen, Salzfüllen, Aufheizen, Abkühlen und Salzentleeren, unterteilt in Phasen I bis VIII. Die angegebenen Temperaturen beziehen sich auf den Betrieb eines Reaktors mit "HTS"-Salz als Wärmeträger. Die Temperatur T_{R1} entspricht weitgehend der Temperatur T_{G1}; die Abweichungen sind vernachlässigbar.

Darin zeigt Phase I das Vorwärmen des Reaktorsystems auf Salzeinfülltemperatur mit Durchleiten von Temperiergas 55 durch die Reaktionsrohre 8 bei einem Start ab Umgebungstemperatur, die hier mit T₀ = 20°C angenommen wird, zum Zeitpunkt t_{I,0}. Bei einer Temperatur T₁ = 80°C, mit einer Abweichung von ±5°C, werden die Begleitheizungen 64,65,66,67,68 des Pumpengehäuses, des Kühlergehäuses 40, des Aufheizergehäuses, der Füll/Entleerungsrohrleitungen und Überlaufleitungen mit Anfahrdampf beschickt. Bei T₂ = 210°C zum Zeitpunkt t_{II} am Ende der Phase I ist die Salzeinfülltemperatur erreicht.

Wie bereits weiter oben erläutert, wird im dargestellten Ausführungsbeispiel die Temperatur T_{G} des Temperiergases 55 während der Phase I stufenweise erhöht. Zunächst wird es in der Teilphase Ia ab Beginn des Anfahrens zum Zeitpunkt t_{I,0} mit der Temperatur T_{G0,Ia} =120 °C, d.h. 100°C über der Umgebungstemperatur T₀ = 20°C, in die Reaktionsrohre 8 eingeleitet. In der zweiten Stufe wird die Temperiergas-Temperatur auf T_{G0,Ib} = 180°C erhöht (Phase Ib) und in der dritten Stufe auf T_{G0,Ic} = 240°C (Phase Ic).

Wie den Temperaturverläufen T_{R0}, T_{G1} und T_{D} in Phase I zu entnehmen ist, erwärmt sich der Reaktor 1 in seinem Gaseintrittsbereich 10,13,14 relativ schnell auf die Temperatur T_{G0} des zugeführten Temperiergases 55, während die Erwärmung im Gasaustrittsbereich 11,15,16 beträchtlich verzögert erfolgt und demgegenüber die Erwärmung der kältesten Stelle des Reaktors 1 noch einmal deutlich verzögert ist.

Am Ende der Phase I hat sich jedoch die Temperatur T_{D} der kältesten Stelle des Reaktors 1 der Gasaustrittstemperatur T_{G1} angeglichen. Erkennbar ist jedoch für alle drei Temperaturen T_{R0}, T_{G1}, T_{D} ein stufenförmiger Verlauf, der der stufenweisen Erhöhung der Eintrittstemperatur T_{G0} des Temperiergases 55 folgt.

Ferner enthält das Diagramm eine Gerade ΔT_{aV}/Δt, die bei t_{I,0} die Ordinate bei T₀ schneidet und sich zwischen Ordinate und der Kurve T_{G1} an deren äußersten Punkt anlegt. Diese Gerade ΔT_{aV}/Δt stellt den Maximalwert der erfindungsgemäß zeitlich gemittelten Änderungsgeschwindigkeit der Temperatur T_{G1} des Temperiergases 55 bei dessen Austritt aus den Reaktionsrohren 8 dar, wobei jeder Zeitraum mit dem ersten Einleiten des Temperiergases 55 beginnt, d.h. zum Zeitpunkt t_{I,0}. Diese zeitlich gemittelte Änderungsgeschwindigkeit darf erfindungsgemäß 30°C/h nicht überschreiten, im dargestellten Ausführungsbeispiel beträgt sie weniger als 10°C/h.

In Phase II, ab t_{II} bis t_{III}, wird nun das flüssige Salz 17 mit einer Salzeinfülltemperatur von T₂ = 210°C in das Reaktorsystem eingefüllt, bis das minimale Niveau "LLL" (siehe Fig. 3) erreicht ist. Nach dem Einfüllen des Salzes 17 werden die Salzfüllungen im Reaktor 1 mit Stickstoff überlagert. Das Temperiergas 55 kann in dieser Phase schon außer Betrieb genommen werden oder den Aufheizprozess noch weiter unterstützen.

Anschließend, ab t_{III} beginnt Phase III mit Aufheizen des Reaktorsystems auf Solltemperatur T_{t =} 360°C. Diese Phase beginnt mit Inbetriebnahme der Umwälzeinrichtung 2 und des Aufheizens. Das Temperiergas 55 und die Dampfbeheizung werden außer Betrieb genommen mit Ausnahme der Stutzen und Rohrleitungen des Salzüberlaufs, der Entlüftung sowie der Salzeintrittsleitung des Aufheizers 3. Während des Aufheizvorgangs wird überschüssiges HTS-Salz abgelassen. Das Aufheizen wird beendet, sobald die Solltemperatur Tₜ (Zeitpunkt t_{IV}) erreicht ist. Im Falle des Heißtests ist die Solltemperatur Tₜ die Heißtesttemperatur, im Falle des Normalbetriebs die Betriebstemperatur, bei der die Reaktion des durch die katalysatorgefüllten Reaktionsrohre 8 anspringt.

In Phase III entsprechen die Temperaturen T_{R0}, T_{R1}, T_{D} schon weitgehend der Salztemperatur T_{S}, d.h. der gesamte Reaktor 1 ist auf die Salztemperatur T_{S} erwärmt. In der Mitte der Phase III ist die Solltemperatur Tₜ= 360°C erreicht.

Es schließt sich ab t_{IV} die stationäre Phase IV an (Fig. 4 und 5), in der entweder beim Heißtest die Heißtesttemperatur über ca. 4 Stunden gehalten wird und der Aufheizer 3 nur anspringt, um die Wärmeverluste auszugleichen, oder die Temperatur entsprechend der Solltemperatur Tₜ für den Normalbetrieb eingestellt und gehalten wird.

In Fig. 5 ist der Abfahrvorgang zur Beendigung der stationären Phase IV dargestellt.

Der Abfahrvorgang beginnt mit dem Abkühlen des flüssigen Salzes 17 von Betriebstemperatur Tₜ auf die Salzentleerungstemperatur T₃, die im vorliegenden Fall bei 220°C liegt. Beim Abkühlen auf Salzentleerungstemperatur T₃ in Phase V ab dem Zeitpunkt tv wird das Salz 17 durch die Umwälzeinrichtung 2 weiterhin umgewälzt und das Reaktorsystem mit dem Kühler 4 auf Salzentleerungstemperatur T₃ abgekühlt. Während der Abkühlung mit Salzumwälzung ist die Abkühlgeschwindigkeit nicht beschränkt. Das sich während des Abkühlvorgangs verringernde Salzvolumen wird ständig ergänzt.

Mit der Verringerung der Salztemperatur T_{S} in der Phase V verringern sich im Wesentlichen ohne Zeitverzögerung auch die Temperaturen T_{R0}, T_{R1}, T_{D} des Reaktors 1 am Eintritt in die Reaktionsrohre 8 und am Austritt aus den Reaktionsrohren 8 sowie am unteren Verteilerkanal 24. Dieser hat zum Gaseintrittsbereich den größten Abstand hat und weist somit bei Temperaturänderungen mittels Temperiergas die größte Zeitverzögerung auf. Der gesamte Reaktor 1 kühlt sich also im Wesentlichen gleichmäßig entsprechend der Abkühlung des Salzes 17 ab.

Ist zu Beginn (t_{VI}) der Phase VI die Salzentleerungstemperatur T₃ erreicht, so wird die Umwälzeinrichtung 2 außer Betrieb genommen. Die Rohrleitungen und der Salztank 6 werden beheizt, damit das Salz 17 während des Abfließens nicht erstarrt und so ungehindert abfließen kann. Der Entleerungsvorgang kann auch bei höherem Temperaturniveau beginnen, vorausgesetzt, der Salztank 6 ist auf die entsprechende Temperatur ausgelegt. Alternativ kann das Salz 17 auch im Reaktor 1 verbleiben.

In Phase VII, ab dem Zeitpunkt t_{VII} wird das Reaktorsystem auf Umgebungstemperatur T₀ abgekühlt. Dies geschieht entweder durch natürliche Abstrahlung oder durch Einblasen von Kühlluft in die Reaktionsrohre 8. Dabei ist die Umwälzeinrichtung 2 außer Betrieb. Das Abkühlen des Reaktorsystems mit Kühlluft oder Stickstoff kann nur so lange erfolgen, bis die Temperatur im Reaktorsystem die Gebläseaustrittstemperatur erreicht hat, danach kann das Gebläse abgeschaltet werden.

Im dargestellten Ausführungsbeispiel wird zu Beginn der Phase VII kühles Temperiergas 55 von oben in die Reaktionsrohre 8 eingeleitet. Dieses bewirkt eine rasche Abkühlung des Gaseintrittsbereiches des Reaktors 1, wohingegen der Gasaustrittsbereich sich nur mit einer relativ großen Zeitverzögerung abkühlt, wie aus den unterschiedlichen Temperaturverläufen T_{R0} und T_{G1} ersichtlich ist. Die beim Anfahren kälteste Stelle des Reaktors 1 wird beim Abfahren nun die heißeste Stelle des Reaktors 1. Dort erfolgt aufgrund des relativ großen Abstandes zum kühlen Temperiergas 55 die Abkühlung erst mit beträchtlicher Zeitverzögerung, sodass die entsprechende Temperatur T_{D} deutlich über der Gasaustrittstemperatur T_{G1} des Temperiergases 55 liegt. Am Ende der Phase VII haben sich die Temperaturen T_{R0}, T_{G1}, T_{D} von Gaseintritt und Gasaustritt sowie der heißesten Stelle des Reaktors 1 wieder aneinander angenähert. Die Zufuhr des Temperier- bzw. Kühlgases 55 wird nun zum Zeitpunkt t_{VIII} gestoppt.

Die Temperatur T_{G0} des Temperiergases 55 beim Eintritt in die Reaktionsrohre 8 beträgt in diesem Ausführungsbeispiel konstant 120°C.

In das Diagramm ist eine Gerade ΔT_{aV}/Δt eingezeichnet, die im Zeitpunkt t_{VII}, dem Beginn der Temperiergaszufuhr, die (noch) gemeinsame Temperaturkurve von T_{R0}, T_{G1} und T_{D} schneidet und sich dann von unten an die Temperaturkurve T_{G1} anlegt. Die Gerade ΔT_{aV}/Δt stellt im gezeigten Ausführungsbeispiel den Maximalwert der erfindungsgemäß zeitlich gemittelten Änderungsgeschwindigkeit der Temperatur T_{G1} des Temperiergases 55 bei dessen Austritt aus den Reaktionsrohren 8 dar, wobei der Zeitraum mit dem Einleiten des Temperiergases 55 in die Reaktionsrohre 8 beginnt. Ersichtlich ist die erfindungsgemäß zeitlich gemittelte Änderungsgeschwindigkeit der Temperatur T_{G1} im Vergleich zum in Fig. 4 dargestellten Anfahren wesentlich geringer, da der für eine Temperaturänderung, z.B. 60°C, benötigte Zeitraum wesentlich größer ist. Wesentlich ist, dass diese zeitlich gemittelte Änderungsgeschwindigkeit der Temperatur T_{G1} höchstens 30°C/h beträgt.

Ein weiteres Abkühlen in Phase VIII, ab dem Zeitpunkt t_{VIII}, geschieht mit natürlicher Wärmeabstrahlung. Zur Beschleunigung noch können einige Stutzen geöffnet werden.

Eine zusätzliche Vergleichmäßigung der Temperaturunterschiede im Hauptteil A des Reaktors 1 während des Anfahrens und/oder Abfahrens kann erreicht werden, wenn während der Phase I bzw. VII und/oder VIII die Salzumwälzeinrichtung 2,2' zumindest zeitweise in Betrieb genommen wird.

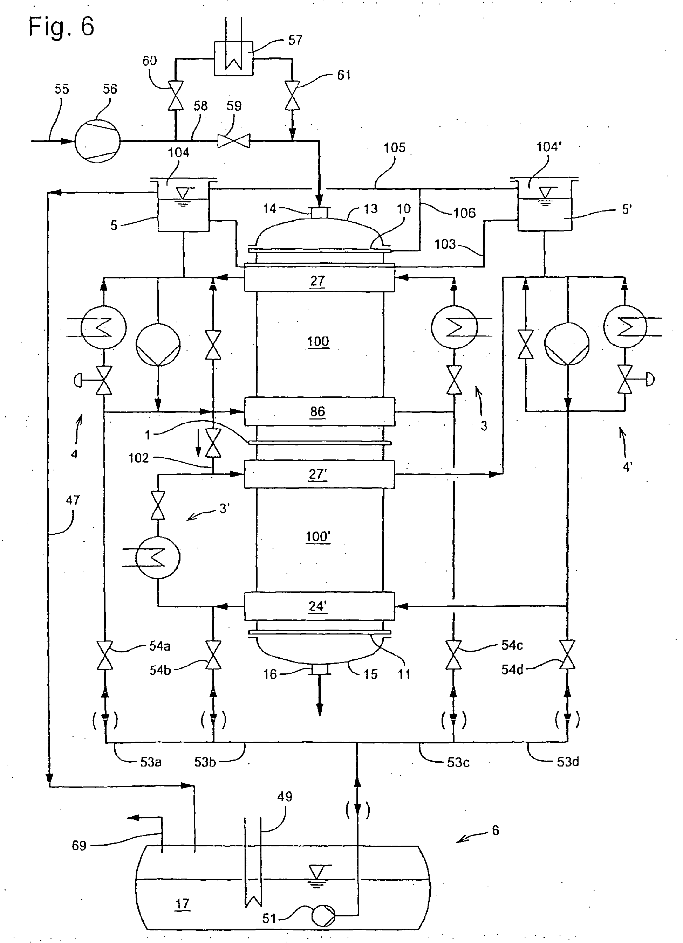

Fig. 6 zeigt als zweites Ausführungsbeispiel für die Anwendung des erfindungsgemäßen Verfahrens eine Variante des in Fig. 1 dargestellten Reaktorsystems. Während das Reaktorsystem aus Fig. 1 einen einzonigen Reaktor 1 aufweist, hat das in Fig. 6 dargestellte Reaktorsystem einen zweizonigen Reaktor 1', wobei die beiden Zonen 100, 100' durch ein Trennblech 101 voneinander getrennt sind. Zur Vermeidung von Wiederholungen werden im Folgenden nur die Änderungen gegenüber dem Reaktorsystem aus Fig. 1 beschrieben. Im übrigen wird auf die Beschreibung zu Fig. 1 Bezug genommen.

Die Begleitheizungen und die Isolierungen sind in Fig. 6 nicht dargestellt. Sie werden jedoch ähnlich ausgeführt wie bei dem Reaktorsystem nach Fig. 1.

Bei dem in Fig. 6 dargestellten Reaktorsystem hat jede der beiden Zonen 100, 100' eine eigene Apparategruppe Umwälzeinrichtung 2, 2'/Kühler 4, 4'/optionaler Bypass. Eine Verbindungsleitung 102 verbindet die Wärmeträgerräume der beiden Zonen an Stellen unterschiedlichen Drucks, im dargestellten Ausführungsbeispiel die Druckseite der Pumpe der Zone 100 mit der Saugseite der Pumpe der Zone 100'. Die Verbindungsleitung 102 kann auch andere Stellen unterschiedlichen Drucks miteinander verbinden. Oder es können auch mehrere Verbindungsleitungen 102 an unterschiedlichen Stellen angeschlossen sein. Über die Verbindungsleitung(en) 102 kann bei An- oder Abfahrvorgängen zum Ausgleich von Temperaturdifferenzen Salz von einer Zone in die andere geführt werden. Zusätzlich sind die Ausgleichsbehälter 5, 5' mit einer direkten Salzausgleichsleitung 103 miteinander verbunden, um bei geöffneter Verbindungsleitung 102 die überströmende Salzmenge wieder zurückzuführen und damit die Niveaustände in den Ausgleichsbehältern 5, 5' auszugleichen. Die Ausgleichsbehälter 5, 5' sind vorzugsweise dicht am Reaktor 1' angeordnet. Oftmals bietet es sich an, die direkte Salzausgleichsleitung 103 direkt auf dem oberen Verteilerkanal 27 zu verlegen. Die Isolierung wird dann über Reaktor 1' und über dieser Salzausgleichsleitung 103 vorgesehen, wodurch man sich für diese Salzausgleichsleitung 103 eine gesonderte isolierte Begleitheizung erspart. Die Gasräume 104, 104' der Ausgleichsbehälter 5, 5' werden mit einer Gasausgleichsleitung 105 miteinander verbunden. Die Entgasungsleitung 106 des Reaktors 1' wird entweder an die Gasräume 104, 104' eines oder beider Ausgleichsbehälter 5, 5' angeschlossen oder auch nur an die Gasausgleichsleitung 105 der beiden Ausgleichsbehälter 5, 5', wie in Fig. 6 beispielhaft gezeigt.

Bei dem in Fig. 6 dargestellten Ausführungsbeispiel erstrecken sich die (hier nicht dargestellten) Reaktionsrohre 8 kontinuierlich über beide Zonen 100, 100' hinweg vom oberen Rohrboden 10 bis zum unteren Rohrboden 11, in denen die jeweiligen Enden der Reaktionsrohre 8 dicht eingeschweißt sind.

Das erfindungsgemäße Verfahren zum An- und Abfahren des Mehrzonenreaktors wird wie bei einem einzonigen Reaktor durchgeführt, d.h. die Temperatur des Temperiergases 55 bei dessen Eintritt in die Reaktionsrohre 8 am oberen Rohrboden 10 - i.e. beim Eintritt in die obere, erste Zone 100 - wird beim Anfahren nach oben und beim Abfahren nach unten und/oder der Volumenstrom des Temperiergases 55 wird nach oben so begrenzt, dass über jeden Zeitraum, der mit dem ersten Einleiten des Temperiergases 55 beginnt, die zeitlich gemittelte Änderungsgeschwindigkeit der Temperatur des Temperiergases 55 bei dessen Austritt aus den Reaktionsrohren 8 am unteren Rohrboden 11 - i.e. beim Austritt aus der unteren, zweiten Zone 100' - 30°C/h nicht überschreitet.

### Bezugszeichenliste

- 1, 1': Reaktor
- 2, 2': Umwälzeinrichtung
- 3, 3': Aufheizer
- 4, 4': Kühler
- 5, 5': Ausgleichsbehälter
- 6: Salztank
- 7: Gasbehandlungsvorrichtung
- 8: Reaktionsrohr
- 9: Rohrbündel
- 10: oberer Rohrboden
- 11: unterer Rohrboden
- 12: Mantel
- 13: obere Haube
- 14: Gaseintrittsstutzen
- 15: untere Haube
- 16: Gasaustrittsstutzen
- 17: Salz
- 18: ringförmiges Umlenkblech
- 19: scheibenförmiges Umlenkblech
- 20: Rohrbündelinneres
- 21: äußerer Mantelraum
- 22: Laufrad
- 23: untere Reaktorzuleitung
- 24, 24': unterer Verteilerkanal
- 25: untere Mantelöffnungen
- 26: obere Mantelöffnungen
- 27, 27': oberer Verteilerkanal
- 28: obere Reaktorableitung
- 29: Aufheizerzuleitung
- 30: obere Aufheizerableitung
- 31: Aufheizer-Regelventil
- 32: Kühlerzulaufleitung
- 33: Kühlerablaufleitung
- 34: Verdampferrohr
- 35: oberer Kühlerrohrboden
- 36: obere Kühlerhaube
- 37: unterer Kühlerrohrboden
- 38: untere Kühlerhaube
- 39: Verbindungsgehäuse
- 40: Kühlergehäuse
- 41: Speisewasser
- 42: Speisewasserleitung
- 43: Steigleitung
- 44: Verbindungsstelle
- 45: Entgasungsleitung
- 46: Stickstoffleitung
- 47: Überlaufleitung
- 48: Füllstandsmessung
- 49: innere Heizung Salztank
- 50: äußere Heizung Salztank
- 51: Salztankpumpe
- 52: Rücklaufleitung
- 53: Salzverbindungsleitung
- 54: Absperrventil
- 55: Temperiergas
- 56: Gebläse
- 57: Gaserhitzer
- 58: Gashauptleitung
- 59: Gasabsperrarmatur
- 60: Gasabsperrarmatur
- 61: Gasabsperrarmatur
- 62: Gasmischer.
- 63: Zufuhrleitung
- 64: isolierte Begleitheizung an Pumpengehäuse
- 65: isolierte Begleitheizung an Aufheizer
- 66: isolierte Begleitheizung an Kühlergehäuse
- 67: isolierte Begleitheizung an Verbindungsleitungen zwischen Peripherieaggregaten und Reaktor
- 68: isolierte Begleitheizung an Verbindungsleitungen zum Salztank
- 69: Be- und Entlüftungsleitung
- 70: Thermorohr
- 71: Temperaturmessstellen in Thermorohr
- 80: Umlenkbleche in Dampferzeuger
- 81: Kühlergehäuse
- 82: Kühlerhaube
- 83: Dampfaustrittsstutzen
- 84: Sammelraum
- 85: Trennplatte
- 86: Flüssigkeitsraum
- 87: Verbindungsrohr
- 88: Sumpfabzugsleitung
- 89: Oberflächenentschlammungsleitung
- 90: Zyklonabscheider
- 91: Dampf
- 92: Feinabscheider
- 93: unterer Niveaumessstutzen
- 94: oberer Niveaumessstutzen
- 100, 100': Zone
- 101: Trennblech
- 102: Verbindungsleitung
- 103: Salzausgleichsleitung
- 104, 104': Gasräume
- 105: Gasausgleichsleitung
- 106: Entgasungsleitung

## Patentansprüche

1. Verfahren zur Temperaturänderung eines Rohrbündelreaktors für katalytische Gasphasenreaktionen beim Anfahren und Abfahren, wobei der Rohrbündelreaktor einen Reaktorhauptteil aufweist mit einem Bündel vertikal angeordneter Reaktionsrohre, einem oberen und einem unteren Rohrboden, die mit den oberen bzw. unteren Enden der Reaktionsrohre dicht verbunden sind, und einem Reaktormantel, der das Rohrbündel umschließt, und wobei die Außenseiten der Reaktionsrohre im Normalbetrieb von einem Wärmeträger umspült werden, der eine Schmelztemperatur im Bereich von 100°C bis 450°C aufweist und in mindestens einem Kreislauf durch den Reaktorhauptteil hindurch umgewälzt wird, mit den folgenden Schritten:
a) Verändern der Wärmeträgertemperatur durch einen Wärmetauscher beim Umwälzen des Wärmeträgers und
b) Hindurchführen eines Temperiergases durch die Reaktionsrohre zumindest dann, wenn der Wärmeträger noch nicht bzw. nicht mehr umgewälzt wird,
**dadurch gekennzeichnet, daß** die Temperatur des Temperiergases (55) bei dessen Eintritt in die Reaktionsrohre (8) beim Anfahren nach oben und beim Abfahren nach unten und/oder der Volumenstrom des Temperiergases (55) nach oben so begrenzt werden, dass über jeden Zeitraum, der mit dem ersten Einleiten des Temperiergases (55) beginnt, die zeitlich gemittelte Änderungsgeschwindigkeit der Temperatur des Temperiergases (55) bei dessen Austritt aus den Reaktionsrohren (8) 30°C/h nicht überschreitet.

2. Verfahren nach Anspruch 1, **dadurch gekennzeichnet, dass** die zeitlich gemittelte Änderungsgeschwindigkeit der Temperatur des Temperiergases (55) bei dessen Austritt aus den Reaktionsrohren (8) 20°C/h nicht überschreitet.

3. Verfahren nach Anspruch 2, **dadurch gekennzeichnet, dass** die zeitlich gemittelte Änderungsgeschwindigkeit der Temperatur des Temperiergases (55) bei dessen Austritt aus den Reaktionsrohren (8) 10°C/h nicht überschreitet.

4. Verfahren nach einem der Ansprüche 1 bis 3, **dadurch gekennzeichnet, dass** das Temperiergas (55) durch die Reaktionsrohre (8) von oben nach unten geführt wird, wenn sich fester Wärmeträger innerhalb des Reaktormantels (12) befindet.

5. Verfahren nach einem der vorhergehenden Ansprüche, **dadurch gekennzeichnet, dass** der Unterschied zwischen der Temperatur des Temperiergases (55) bei dessen Eintritt in die Reaktionsrohre (8)und der Temperatur des eintrittsseitigen Rohrbodens (10) zu jedem Zeitpunkt kleiner als 150°C, bevorzugt kleiner als 100°C und besonders bevorzugt kleiner als 70°C ist.

6. Verfahren nach einem der vorhergehenden Ansprüche, **dadurch gekennzeichnet, dass** die Temperatur des Temperiergases (55) bei dessen Austritt aus den Reaktionsrohren (8) direkt gemessen wird.

7. Verfahren nach einem der vorhergehenden Ansprüche, **dadurch gekennzeichnet, dass** sich innerhalb des Rohrbündels (9) in dessen Längsrichtung mindestens ein Thermorohr (70) erstreckt und die Temperatur an mindestens einer Temperaturmessstelle (71a,71b,71c,71d) innerhalb des Thermorohrs (70) gemessen wird.

8. Verfahren nach einem der vorhergehenden Ansprüche, wobei der Reaktorhauptteil ferner mindestens einen oberen und einen unteren Verteiler- bzw. Sammelkanal aufweist, die an der Außenseite des Reaktormantels befestigt sind und zum Verteilen des in den Reaktormantel eintretenden bzw. zum Sammeln von aus diesem austretenden Wärmeträger dienen, **dadurch gekennzeichnet, dass** beim Anfahren der Wärmeträger (17) ab dann umgewälzt wird, wenn die niedrigste Temperatur am Reaktorhauptteil A mindestens über der Schmelztemperatur des Wärmeträgers (17) liegt und die Durchschnittstemperatur des Reaktorhauptteils A mindestens 20°C, bevorzugt mindestens 40°C und besonders bevorzugt mindestens 65°C über der Schmelztemperatur des Wärmeträgers (17) liegt.

9. Verfahren nach einem der vorhergehenden Ansprüche, **dadurch gekennzeichnet, dass** sämtliche an den Rohrbündelreaktor (1) angeschlossenen Aggregate wie Umwälzpumpe (22), Wärmetauscher (4) und E-Aufheizer (3) sowie alle Wärmeträger (17) führenden oder an die Wärmeträgerseite angeschlossener Leitungen wie Verbindungsleitungen, Füll- und Entleerungsrohrleitungen, Entgasungsleitungen sowie Überlaufleitungen mit isolierten Begleitheizungen ( 64,65,66,67,68) beheizt werden, sofern keine alternative Beheizungsmöglichkeit vorliegt.

10. Verfahren nach Anspruch 9, **dadurch gekennzeichnet, dass** die Temperatur der Begleitheizung (64,65,66,67,68) mindestens 160°C, bevorzugt mindestens 180°C und ganz bevorzugt mindestens 220°C, aber höchstens 250°C beträgt.

11. Verfahren nach Anspruch 10, **dadurch gekennzeichnet, dass** die Begleitheizung (64,65,66,67,68) mit Sattdampf betrieben wird.

12. Verfahren nach einem der vorhergehenden Ansprüche, **dadurch gekennzeichnet, dass** die an den Reaktorhauptteil A fest angeschlossenen Peripherieaggregate wie Pumpengehäuse, Aufheizergehäuse und Wärmetauscher beheizt werden, sobald der Rohrbündelreaktor (1) eine Durchschnittstemperatur zwischen Eintritt und Austritt hat, die zwischen 65°C und 95°C, bevorzugt zwischen 70°C und 90°C und besonders bevorzugt zwischen 75°C und 85°C liegt.

13. Verfahren nach einem der vorhergehenden Ansprüche, **dadurch gekennzeichnet, dass** der Wärmeträger (17) eine Mischung aus zwei oder dreien der Salze Natriumnitrit, Natriumnitrat und Kaliumnitrat ist.

14. Verfahren nach einem der Ansprüche 1 bis 9, **dadurch gekennzeichnet, dass** der Wärmeträger (17) eine Mischung aus Carbonatsalzen ist.

15. Verfahren nach einem der vorhergehenden Ansprüche, **dadurch gekennzeichnet, dass** es bei Oxidations-, Hydrierungs-, Dehydrierungs-, Nitrierungs-, Alkylierungsprozesse und dergl. Verwendung findet.

16. Verfahren nach einem der vorhergehenden Ansprüche, **dadurch gekennzeichnet, dass** es für die Herstellung von Ketonen, Methylisobutylketon, Mercaptan, Isopren, Anthrachinon, o-Kresol, 1-Octen, Furfural, Acetylen, Vinylacetat, Isopropylchlorid, Naphtalsäureanhydrid, Vinylchlorid, Oxoalkohol, Pyrotol, Styrol, Methansäurenitril, Polyphenylenoxid, Dimethylphenol, Pyridinaldehyd, hydriertem Nitrilkautschuk, Alphaolefinen, Vitamin B6, Blausäure, Anilin, Methansäurenitral, Difluormethan, 4-Methyl-2-Pentanon und Tetrahydrofuran sowie im besonderen für die Oxidation von Dimethylbenzolen (m, o, p) zu den entsprechenden Mono- und Dialdehyden,
Oxidation von Dimethylbenzolen (m, o, p) zu den entsprechenden Mono- und Dicarbonsäuren bzw. deren Anhydriden,
Oxidation von Trimethylbenzolen zu den entsprechenden Mono-, Di- und Trialdehyden,
Oxidation von Trimethylbenzolen zu den entsprechenden Mono-, Di- und Tricarbonsäuren bzw. deren Anhydriden,
Oxidation von Durol zu Pyromellithsäureanhydrid,
Oxidation von gamma- bzw. beta-Picolin zu gamma- bzw. beta-Picolincarbaldehyd,
Oxidation von gamma- bzw. beta-Picolin zu Isonicotinsäure bzw. Nicotinsäure,
Oxidation von Ethylen zu Ethylenoxid,
Oxidation von Propen zu Acrolein,
Oxidation von Acrolein zu Acrylsäure,
Oxidation von Propan zu Acrolein,
Oxidation von Propan zu Acrylsäure,
Oxidation von Butan, Benzol, Butylen oder Butadien zu Maleinsäureanhydrid (MSA),
Oxidation von Raffinat zu MSA,
Oxidation von i-Buten zu Methacrolein,
Oxidation von Methacrolein zu Methacrylsäure,
Oxidation von Methacrolein zu Methylmethacrylat,
Oxidation von i-Butan zu Methacrolein,
Oxidation von i-Butan zu Methacrylsäure,
Ammonoxidation von aromatischen Kohlenwasserstoffen wie Toluol und Xylol in aromatische Nitride wie Benzonitril, Phtalonitril oder ähnliche wie
Ammonoxidation von Dimethylbenzolen (m, o, p) zu den entsprechenden Mono- und Dinitrilen,
Ammonoxidation von Trimethylbenzolen zu den entsprechenden Mono- und Di- bzw. Trinitrilen,
Ammonoxidation von Propan zu Acrylnitril,
Ammonoxidation von Propen zu Acrylnitril,
Ammonoxidation von beta-Picolin zu 3-Cyanopyridin,
Ammonoxidation von gamma-Picolin zu 4-Cyanopyridin,
Oxidation von Methanol zu Formaldehyd,
Oxidation von Naphthalin und/oder 0-Xylol, ggf. im Mischbetrieb,
zu Phthalsäureanhydrid,
Oxidation von Ethan zu Essigsäure,
Oxidation von Ethanol zu Essigsäure,
Oxidation von Geraniol zu Citral,
Oxidation von Ethen zu Ethylenoxid,
Oxidation von Propen zu Propylenoxid,
Oxidation von Chlorwasserstoff zu Chlor,
Oxidation von Glykol zu Glyoxal und Hydrierung von MSA zu Butandiol,
Verwendung findet.

## Claims

1. A method for changing the temperature of a tube bundle reactor for catalytic gas phase reactions during start-up and shut-down, wherein the tube bundle reactor includes a main reactor body with a bundle of vertically arranged reaction tubes, upper and lower tubesheets which are tightly connected with the upper and lower ends of the reaction tubes, and a reactor shell which encloses the tube bundle, and wherein in normal operation a heat carrier flows around the outsides of the reaction tubes, which heat carrier has a melting temperature in the range from 100°C to 450°C and is circulated through the main reactor body in at least one circuit, comprising the following steps:
a) changing the heat carrier temperature by means of a heat exchanger during circulation of the heat carrier, and
b) passing a temperature gas through the reaction tubes at least when the heat carrier is not yet or no longer circulated,
**characterized in that** the temperature of the temperature gas (55) upon entry thereof into the reaction tubes (8) is limited upwards during start-up and downwards during shut-down and/or the volume flow of the temperature gas (55) is limited upwards such that for each period which starts with the first introduction of the temperature gas (55) the time-averaged rate of change of the temperature of the temperature gas (55) does not exceed 30°C/h upon exit thereof from the reaction tubes (8).

2. The method according to claim 1, **characterized in that** the time-averaged rate of change of the temperature of the temperature gas (55) does not exceed 20°C/h upon exit thereof from the reaction tubes (8).

3. The method according to claim 2, **characterized in that** the time-averaged rate of change of the temperature of the temperature gas (55) does not exceed 10°C/h upon exit thereof from the reaction tubes (8).

4. The method according to any of claims 1 to 3, **characterized in that** the temperature gas (55) is guided through the reaction tubes (8) from the top to the bottom, when solid heat carrier is present inside the reactor shell (12).

5. The method according to any of the preceding claims, **characterized in that** the difference between the temperature of the temperature gas (55) upon entry thereof into the reaction tubes (8) and the temperature of the entry-side tubesheet (10) at any time is less than 150°C, preferably less than 100°C, and particularly preferably less than 70°C.

6. The method according to any of the preceding claims, **characterized in that** the temperature of the temperature gas (55) is measured directly upon exit thereof from the reaction tubes (8).

7. The method according to any of the preceding claims, **characterized in that** inside the tube bundle (9) in longitudinal direction thereof at least one thermometer tube (70) extends and the temperature is measured at at least one temperature measuring point (71 a, 71 b, 71 c, 71d) inside the thermometer tube (70).

8. The method according to any of the preceding claims, wherein the main reactor body furthermore includes at least one upper and one lower distribution and collection channel, which are attached to the outside of the reactor shell and serve for distributing the heat carrier entering into the reactor shell and for collecting the heat carrier exiting from the same, **characterized in that** during start-up the heat carrier (17) is circulated from the time when the lowest temperature at the main reactor body A lies at least above the melting temperature of the heat carrier (17) and the average temperature of the main reactor body A lies at least 20°C, preferably at least 40°C and particularly preferably at least 65°C above the melting temperature of the heat carrier (17).

9. The method according to any of the preceding claims, **characterized in that** all units connected to the tube bundle reactor (1), such as circulation pump (22), heat exchanger (4) and electric heater (3), as well as all conduits carrying the heat carrier (17) or connected to the heat carrier side, such as connecting conduits, filling and draining tube conduits, degassing conduits and overflow conduits, are heated with insulated trace heaters (64, 65, 66, 67, 68), if there is no alternative heating possibility.

10. The method according to claim 9, **characterized in that** the temperature of the trace heater (64, 65, 66, 67, 68) is at least 160°C, preferably at least 180°C, and quite preferably at least 220°C, but not more than 250°C.

11. The method according to claim 10, **characterized in that** the trace heater (64, 65, 66, 67, 68) is operated with saturated steam.

12. The method according to any of the preceding claims, **characterized in that** the peripheral units firmly connected to the main reactor body A, such as pump housing, heater housing and heat exchanger, are heated as soon as the tube bundle reactor (1) has an average temperature between inlet and outlet, which lies between 65°C and 95°C, preferably between 70°C and 90°C and particularly preferably between 75°C and 85°C.

13. The method according to any of the preceding claims, **characterized in that** the heat carrier (17) is a mixture of two or three of the salts sodium nitrite, sodium nitrate and potassium nitrate.

14. The method according to any of claims 1 to 9, **characterized in that** the heat carrier (17) is a mixture of carbonate salts.

15. The method according to any of the preceding claims, **characterized in that** it is used in oxidation, hydrogenation, dehydrogenation, nitration, alkylation processes and the like.

16. The method according to any of the preceding claims, **characterized in that** it is used for the production of ketones, methyl isobutyl ketone, mercaptan, isoprene, anthraquinone, o-cresol, 1-octene, furfural, acetylene, vinyl acetate, isopropyl chloride, naphthalic anhydride, vinyl chloride, oxo alcohol, pyrotol, styrene, methane acid nitrile, polyphenylene oxide, dimethyl phenol, pyridine aldehyde, hydrogenated nitrile rubber, alpha-olefins, vitamin B6, hydrocyanic acid, aniline, methane acid nitral, difluoromethane, 4-methyl-2-pentanone and tetrahydrofuran as well as in particular for the
oxidation of dimethylbenzenes (m, o, p) to obtain the corresponding mono- and dialdehydes,
oxidation of dimethylbenzenes (m, o, p) to obtain the corresponding mono- and dicarboxylic acids and their anhydrides,
oxidation of trimethylbenzenes to obtain the corresponding mono-, di- and trialdehydes,
oxidation of trimethylbenzenes to obtain the corresponding mono-, di- and tricarboxylic acids and their anhydrides,
oxidation of durene to obtain pyromellitic anhydride,
oxidation of gamma- or beta-picoline to obtain gamma- or beta-picoline carbaldehyde,
oxidation of gamma- or beta-picoline to obtain isonicotinic acid or nicotinic acid,
oxidation of ethylene to obtain ethylene oxide,
oxidation of propene to obtain acrolein,
oxidation of acrolein to obtain acrylic acid,
oxidation of propane to obtain acrolein,
oxidation of propane to obtain acrylic acid,
oxidation of butane, benzene, butylene or butadiene to obtain maleic anhydride (MA),
oxidation of raffinate to obtain MA,
oxidation of i-butene to obtain methacrolein,
oxidation of methacrolein to obtain methacrylic acid,
oxidation of methacrolein to obtain methyl methacrylate,
oxidation of i-butane to obtain methacrolein,
oxidation of i-butane to obtain methacrylic acid,
ammonoxidation of aromatic hydrocarbons such as toluene and xylene into aromatic nitrides such as benzonitrile, phthalonitrile or the like, such as
ammonoxidation of dimethylbenzenes (m, o, p) to obtain the corresponding mono- and dinitriles,
ammonoxidation of trimethylbenzenes to obtain the corresponding mono-, di- and trinitriles,
ammonoxidation of propane to obtain acrylonitrile,
ammonoxidation of propene to obtain acrylonitrile,
ammonoxidation of beta-picoline to obtain 3-cyanopyridine,
ammonoxidation of gamma-picoline to obtain 4-cyanopyridine,
oxidation of methanol to obtain formaldehyde,
oxidation of naphthalene and/or o-xylene, possibly in mixed operation, to obtain phthalic anhydride,
oxidation of ethane to obtain acetic acid,
oxidation of ethanol to obtain acetic acid,
oxidation of geraniol to obtain citral,
oxidation of ethene to obtain ethylene oxide,
oxidation of propene to obtain propylene oxide,
oxidation of hydrogen chloride to obtain chlorine,
oxidation of glycol to obtain glyoxal and hydrogenation of MA to obtain butane diol.

## Revendications

1. Procédé de modification de la température d'un réacteur à faisceau tubulaire pour des réactions catalytiques en phase gazeuse lors du démarrage et de la mise à l'arrêt, dans lequel le réacteur à faisceau tubulaire comprend une partie principale de réacteur avec un faisceau de tubes de réaction agencés verticalement, un fond à tubes supérieur et un fond à tubes inférieur qui sont reliés de façon étanche aux extrémités supérieures ou inférieures des tubes de réaction, et une enveloppe de réacteur qui entoure le faisceau tubulaire, et dans lequel les faces extérieures et de réaction sont entourées en fonctionnement normal par un caloporteur en écoulement qui présente une température de fusion dans la plage de 100°C à 450°C et qui est mis en recirculation dans au moins un circuit à travers la partie principale de réacteur, présentant les étapes suivantes :
a) on modifie la température du caloporteur au moyen d'un échangeur de chaleur lors de la recirculation du caloporteur, et
b) on fait passer un gaz de températion à travers les tubes de réaction au moins quand le fluide caloporteur n'est pas en recirculation ou n'est plus en recirculation,
**caractérisé en ce que** la température du gaz de températion (55) est limitée à son entrée dans les tubes de réaction (8), vers le haut lors du démarrage et vers le bas lors de la mise à l'arrêt, et/ou **en ce que** le flux volumétrique du gaz de températion (55) est limité vers le haut de telle façon que sur chaque période temporelle qui commence avec la première injection du gaz de températion (55), la vitesse de modification, moyennée dans le temps, de la température du gaz de températion (55) ne dépasse pas 30°C/h lors de sa sortie hors des tubes de réaction (8).

2. Procédé selon la revendication 1, **caractérisé en ce que** la vitesse de modification, moyennée dans le temps, de la température du gaz de températion (55) ne dépasse pas 20°C/h lors de sa sortie hors des tubes de réaction (8).

3. Procédé selon la revendication 2, **caractérisé en ce que** la vitesse de modification, moyennée dans le temps, de la température du gaz de températion (55) ne dépasse pas 10°C/h lors de sa sortie hors des tubes de réaction (8).

4. Procédé selon l'une des revendications 1 à 3, **caractérisé en ce que** le gaz de températion (55) est guidé à travers les tubes de réaction (8) du haut vers le bas quand un caloporteur solide se trouve à l'intérieur de l'enveloppe de réacteur (12).

5. Procédé selon l'une des revendications précédentes, **caractérisé en ce que** la différence entre la température du gaz de températion (55) lors de son entrée dans les tubes de réaction (8) et la température du fond à tubes (10) du côté entrée est à tout instant inférieure à 150°C, de préférence inférieure à 100°C et de façon particulièrement préférée inférieure à 70°C.

6. Procédé selon l'une des revendications précédentes, **caractérisé en ce que** la température du gaz de températion (55) est mesurée directement lors de sa sortie hors des tubes de réaction (8).

7. Procédé selon l'une des revendications précédentes, **caractérisé en ce qu'**au moins un tube thermique (70) s'étend à l'intérieur du faisceau tubulaire (9) dans sa direction longitudinale, et la température est mesurée à au moins un emplacement de mesure de température (71a, 71 b, 71 c, 71 d) à l'intérieur du tube thermique (70).

8. Procédé selon l'une des revendications précédentes, dans lequel la partie principale de réacteur comprend en outre au moins un canal de répartition ou de collecte supérieur et au moins un canal de répartition ou de collecte inférieur, qui sont fixés sur la face extérieure de l'enveloppe de réacteur et servent à répartir le caloporteur qui pénètre dans l'enveloppe de réacteur ou à collecter le collecteur sortant hors de celle-ci, **caractérisé en ce que** lors du démarrage le caloporteur (17) est mis en recirculation à partir du moment où la température la plus basse au niveau de la partie principale de réacteur A se trouve au moins au-dessus de la température de fusion du caloporteur (17), et la température moyenne de la partie principale de réacteur A se trouve de préférence au moins 20°C, de façon préférée au moins 40°C, et de façon particulièrement préférée au moins 65°C au-dessus de la température de fusion du caloporteur (17).

9. Procédé selon l'une des revendications précédentes, **caractérisé en ce que** la totalité des unités raccordées au réacteur à faisceau tubulaire (1), comme une pompe de recirculation (22), un échangeur de chaleur (4) et un dispositif de chauffage électrique (3) ainsi que toutes les conduites menant le caloporteur (17) ou raccordées sur le côté du caloporteur, comme les conduites de liaison, les conduites tubulaires de remplissage et de vidange, les conduites de dégazage ainsi que les conduites de trop-plein sont chauffées au moyen de chauffages associés isolés (64, 65, 66, 67, 68), lorsqu'il n'y a aucune autre possibilité de chauffage.

10. Procédé selon la revendication 9, **caractérisé en ce que** la température du chauffage associé (64, 65, 66, 67, 68) est au moins 160°C, de préférence au moins 180°C, et de façon tout à fait préférée au moins 220°C, mais tout au plus 250°C.

11. Procédé selon la revendication 10, **caractérisé en ce que** le chauffage associé (64, 65, 66, 67, 68) fonctionne avec de la vapeur saturée.

12. Procédé selon l'une des revendications précédentes, **caractérisé en ce que** les unités périphériques raccordées fermement à la partie principale de réacteur A, comme le carter de pompe, le boîtier du dispositif chauffant et l'échangeur de chaleur sont chauffées dès que le réacteur à faisceau tubulaire (1) présente entre l'entrée et la sortie une température moyenne qui est située entre 65°C et 95°C, de préférence entre 70°C et 90°C, et de façon particulièrement préférée entre 75°C et 85°C.

13. Procédé selon l'une des revendications précédentes, **caractérisé en ce que** le caloporteur (17) est un mélange de deux ou trois des sels que sont le nitrite de sodium, le nitrate de sodium et le nitrate de potassium.

14. Procédé selon l'une des revendications 1 à 9, **caractérisé en ce que** le caloporteur (17) est un mélange de sels de carbonate.

15. Procédé selon l'une des revendications précédentes, **caractérisé en ce qu'**il est appliqué dans des processus d'oxydation, d'hydruration, de déshydratation, de nitruration, d'alkylation, et similaires.

16. Procédé selon l'une des revendications précédentes, **caractérisé en ce qu'**il trouve application pour la fabrication de cétones, méthyle-isobutyl-cétone, mercaptan, isoprène, anthraquinone, ortho-crésol, octène-1, furfural, acétylène, acétate de vinyle, chlorure d'isopropyle, anhydride d'acide naphtalique, chlorure de vinyle, oxo-alcool, pyrotol, styrène, nitrure d'acide méthanoïque, oxyde de polyphényle, diméthylphénol, aldéhyde de pyridine, caoutchouc nitrile hydraté, alphaoléfines, vitamine B6, acide cyanhydrique, aniline, nitrate d'acide méthanoïque, difluorométhane, 4-méthyl-2-pentanone et tétrahydrofurane,
ainsi que en particulier pour
oxydation de diméthyle benzols (m, o, p) pour donner les mono- et dialdéhydes correspondants,
oxydation de diméthyle benzols (m, o, p) pour donner les acides mono- et bicarbonés correspondants, ou respectivement leurs anhydrides, oxydation de triméthyl benzols pour donner les mono-, di-, et trialdéhydes correspondants,
oxydation de triméthyl benzols pour donner des acides mono-, bi- et tricarbonés correspondants, ou respectivement leurs anhydrides,
oxydation de durène pour donner de l'anhydride d'acide pyromellitique,
oxydation de picoline gamma ou bêta pour donner du carbaldéhyde de picoline gamma ou bêta,
oxydation de picoline gamma ou bêta pour donner de l'acide isonicotinique ou de l'acide nicotinique,
oxydation d'éthylène en oxyde d'éthylène
oxydation de propène en acroléine
oxydation d'acroléine en acide acrylique
oxydation de propane en acroléine,
oxydation de propane en acide acrylique
oxydation de butane, benzène, butylène ou butadiène pour donner de l'anhydride d'acide maléique (MSA),
oxydation de raffinat pour donner MSA,
oxydation de i-butane en méthacroléine
oxydation de méthacroléine en acide méthacrylique
oxydation de méthacroléine en méthacrylate de méthyle,
oxydation de i-butane en méthacroléine,
oxydation de i-butane en acide méthacrylique,
ammonoxydation d'hydrocarbures aromatiques comme toluène et xylène en nitrures aromatiques comme benzonitrile, phtalonitrile ou analogues,
ammonoxydation de diméthyle benzènes (m, o, p) pour donner les mono- et dinitrures correspondants,
ammonoxydation de triméthyl benzènes pour donner les mono-, di-, et trinitrures correspondants,
ammonoxydation de propane en acrylonitrile,
ammonoxydation de propène en acrylonitrile,
ammonoxydation de picoline bêta en 3-cyanopyridine, ammonoxydation de picoline gamma en 4-cyanopyridine,
oxydation de méthanol en formaldéhyde,
oxydation de naphtaline et/ou de ortho-xylène, éventuellement en fonctionnement mixte, en anhydride d'acide phtalique,
oxydation d'éthane en acide acétique,
oxydation d'éthanol en acide acétique,
oxydation de géraniol en citral,
oxydation d'éthène en oxyde d'éthylène,
oxydation de propène en oxyde de propylène,
oxydation d'acide chlorhydrique en chlore,
oxydation de glycol en glyoxal, et
hydruration de MSA en butanediol.
